# FASCICULE DE BREVET EUROPEEN

(11) **EP 2 087 048 B1**
(45) Date de publication et mention de la délivrance du brevet: **13.01.2010**
(21) Numéro de dépôt: 07825446.3
(22) Date de dépôt: 17.10.2007
(51) Int. Cl.: C09C 3/10, C09C 1/02

(54) **UTILISATION D'UN POLYMÈRE EN PEIGNE, POSSÉDANT AU MOINS UNE FONCTION OXYDE DE POLYALKYLÈNE GREFFÉE, COMME AGENT DE COMPATIBILITÉ DE CHARGES MINÉRALES POUR MATÉRIAUX THERMOPLASTIQUES CHLORÉS**
VERWENDUNG EINES KAMMPOLYMERS MIT MINDESTENS EINER AUFGEPFROPFTEN POLYALKYLENOXIDFUNKTION ALS VERTRÄGLICHKEITSMACHER FÜR CHLORHALTIGE THERMOPLASTE GEGENÜBER MINERALSTOFFZUSÄTZEN
USE OF A COMB POLYMER WITH AT LEAST ONE POLYALKYLENE OXIDE GRAFTED FUNCTION AS A MINERAL CHARGE COMPATIBILITY AGENT FOR CHLORINATED THERMOPLASTIC MATERIALS

(30) Priorité: 31.10.2006 FR 0609535
(43) Date de publication de la demande: 12.08.2009
(73) Titulaire: COATEX S.A.S., 69730 Genay (FR)
(72) Inventeur: GUERRET, Olivier, 69890 La Tour De Salvagny (FR); TROUVE, Patrick, 92140 Clamart (FR); MONGOIN, Jacques, 69650 Quincieux (FR)
(74) Mandataire: Richebourg, Michel François
(86) Numéro de dépôt international: PCT/IB2007/003148
(87) Numéro de publication internationale: WO 2008/053296

(56) Documents cités:
- WO-A-92/02587
- WO-A-93/02021
- WO-A-2004/044022
- US-A1- 2003 082 091

## Description

La présente invention se rapporte au secteur des matériaux thermoplastiques chlorés et chargés au moyen d'une charge minérale, dont la compatibilité entre ladite charge et la résine thermoplastique chlorée est améliorée.

L'invention concerne tout d'abord l'utilisation comme agent compatibilisant, dans un procédé de fabrication d'une résine thermoplastique chlorée chargée par une matière minérale, d'un polymère peigne disposant d'au moins un monomère anionique à insaturation éthylénique sur lequel est greffée au moins une fonction oxyde de polyalkylène.

L'invention concerne aussi les matériaux thermoplastiques chlorés ainsi obtenus, qui présentent une compatibilité améliorée entre la charge et la résine thermoplastique chlorée et ce, tout en diminuant la quantité des agents compatibilisants tels que mis en oeuvre dans les matériaux thermoplastiques chlorés et chargés de l'art antérieur, lesdits agents compatibilisants mis en oeuvre dans l'art antérieur étant essentiellement des acides gras, et plus particulièrement de l'acide stéarique ou ses sels.

Les matériaux thermoplastiques chlorés et notamment ceux à base de PVC ont de nombreuses applications comme la fabrication de tubes (adduction d'eau, assainissement, irrigation, gaines pour le passage des câbles) de matériaux de construction extérieurs et / ou intérieurs (profilés de fenêtres, volets, portes, bardages, faux plafonds) ou de pièces industrielles. Ils contiennent une charge minérale telle que le talc, l'alumine, le dioxyde de titane, l'oxyde de magnésium, le sulfate de baryum, l'aluminium, la silice, le kaolin ou encore le carbonate de calcium naturel ou synthétique, charges qui sont indiquées dans le document JP 50-028105 décrivant des matériaux rigides obtenus à partir du mélange d'une ou plusieurs de ces charges avec du PVC.

Le carbonate de calcium constitue à l'égard des matériaux thermoplastiques chlorés et notamment du PVC une charge minérale privilégiée, puisqu'il permet d'améliorer certaines des propriétés physiques de ces matériaux PVC ainsi chargés, telles que décrites dans le document "The use of calcium carbonate to enhance the physical properties of rigid vinyl products" (Society of Plastic Engineering, Conf., 12-14 octobre 1999) : amélioration de la rigidité, diminution du temps de refroidissement au cours de l'extrusion, ou encore réduction du dépôt en sortie de filière (communément désigné sous l'expression anglaise "die build-up").

Selon les connaissances de base de l'homme du métier, fabriquant de matériau plastiques et notamment de matériaux thermoplastiques chlorés à base de PVC et chargés, la résine qui compose lesdits matériaux est un milieu hydrophobe dans lequel le carbonate de calcium se disperse mal : cela signifie que les grains de carbonate de calcium ne se répartissent pas de manière naturelle et homogène dans une résine thermoplastique chlorée et notamment à base de PVC, lorsqu'ils sont incorporés dans ladite résine. L'homme du métier sait donc que le carbonate de calcium, lorsqu'il n'est pas traité ou mis en oeuvre avec un agent compatibilisant, ne présente pas une bonne compatibilité avec les résines thermoplastiques chlorées. Cette mauvaise répartition ou ce mauvais état de dispersion ou encore cette mauvaise compatibilité se traduit pour le matériau thermoplastique chloré et chargé par des propriétés mécaniques amoindries (telle que notamment sa résistance à l'impact) et des propriétés optiques dégradées (telle que notamment sa brillance).

Aussi, l'homme du métier a mis au point depuis de nombreuses années des méthodes de traitement du carbonate de calcium, en vue d'améliorer sa compatibilité avec des résines thermoplastiques en général, et des résines thermoplastiques chlorées telles que notamment le PVC.

Historiquement, on a d'abord mis en évidence le rôle que peuvent jouer des acides gras comme agent compatibilisant du carbonate de calcium. Ainsi, le document FR 1 047 087 décrit-il l'utilisation de substances pour enrober du carbonate de calcium, lesdites substances étant choisies parmi des acides gras, des alcools gras, des cires et des résines naturelles ou synthétiques ou encore des tensio-actifs. Ces substances peuvent être mises en oeuvre pendant une étape de broyage (en milieu sec ou en milieu aqueux), de séchage, ou de sélection. Ce document met tout particulièrement en avant l'acide stéarique qui, utilisé sous forme de poudre sèche ou d'émulsion, permet de traiter le carbonate de calcium aux étapes précédemment mentionnées, améliorant ainsi sa compatibilité avec les milieux hydrophobes dans lesquels il est susceptible d'être introduit, tels que des plastiques ou encore des peintures en phase solvant.

On retrouve l'utilisation d'acides gras pour traiter du carbonate de calcium dans des documents plus récents. C'est le cas du document WO 00 / 20336 qui décrit le traitement de carbonate de calcium par au moins un sel d'acide gras comportant de 10 à 24 atomes de carbone, et plus particulièrement par l'acide stéarique et son sel de calcium. C'est également le cas du document US 4 151 136 qui décrit le traitement de surface du carbonate de calcium par un acide ayant de 8 à 22 atomes de carbone, et préférentiellement par l'acide stéarique, la matière minérale ainsi traitée étant ensuite encapsulée dans une matrice polymère.

On a aussi développé d'autres agents compatibilisants, tels que des titanates, des aluminates, ou encore des composés sililés.

A ce titre, on peut citer le document CN 1 542 040 qui décrit l'utilisation de titanates, d'aluminates ou de silanes comme agents de traitement du carbonate de calcium, permettant d'introduire ledit carbonate dans une matrice polyéthylène. On parvient ainsi à fabriquer des tuyaux à base de polyéthylène chargé, dont la rigidité est améliorée.

On peut également citer le document FR 2 326 425 qui décrit la mise en oeuvre de composés organotitanates comme agents de traitement de matières inorganiques finement divisées, telles que notamment du carbonate de calcium. Ces composés améliorent la compatibilité des matières minérales avec les matériaux polymères dans lesquels elles sont incorporées après avoir été traitées par lesdits composés organotitanates. On peut ainsi disperser des quantités plus importantes de matières inorganiques dans ces matériaux polymères, que dans le cas des mêmes matières minérales non traitées par ces composés à base d'organotitanates.

Il existe également des documents qui décrivent la mise en oeuvre de plusieurs traitements du carbonate de calcium, en vue de le rendre compatible avec différents matériaux thermoplastiques (tels que notamment des matériaux thermoplastiques chlorés).

Ainsi, le document WO 02 / 55596 révèle un traitement au moyen d'un polydialkysiloxane et d'un acide gras ayant au moins 10 atomes de carbone, cet acide étant préférentiellement l'acide stéarique. Le carbonate ainsi traité est rendu hydrophobe, ce qui facilite son incorporation dans des matériaux thermoplastiques, telles que notamment des polyoléfines destinées à la fabrication de films respirables.

Le document WO 04 / 09711 décrit la mise en oeuvre de 3 agents de traitement du carbonate de calcium : la silice, un acide gras tel que notamment la stéarine, et un composé silane. Le carbonate de calcium ainsi modifié est destiné à des applications plastiques.

Enfin, le document WO 01 / 32787 enseigne le traitement du carbonate de calcium au moyen d'acide stéarique et de distéarate de calcium, en vue d'introduire ledit carbonate dans des matières plastiques.

Cet état de la technique démontre le rôle prépondérant, aux yeux de l'homme du métier, des composés du type acide gras, et notamment de la stéarine et de ses sels, comme agent de traitement du carbonate de calcium afin de le rendre compatible avec les matériaux thermoplastiques dans lesquels il est destiné à être mis en oeuvre, et notamment les résines thermoplastiques chlorées telles que le PVC.

Or, la mise en oeuvre de ces produits n'est pas sans poser de graves problèmes à l'homme du métier.

Tout d'abord, si on décide de traiter le carbonate de calcium au moyen de l'acide stéarique, le taux de conversion dudit acide en stéarate à la surface du carbonate de calcium dépend fortement de certains paramètres du procédé de traitement, qu'il est très difficile de maîtriser précisément : notamment la température à laquelle est réalisé le traitement, et le débit d'acide stéarique.

Ensuite, il faut savoir que l'homme du métier, au moment d'incorporer le carbonate de calcium traité par l'acide stéarique ou ses sels dans la formulation PVC, ajoute dans ladite formulation une quantité supplémentaire de stéarine ; celle-ci joue dans la formulation le rôle de lubrifiant. On peut alors observer un phénomène de surlubrification, la stéarine ajoutée au moment de la formulation s'additionnant à l'acide stéarique ayant servi à traiter le carbonate de calcium. Les conséquences bien connues de l'homme du métier sont un jaunissement des matériaux thermoplastiques obtenus, et des dépôts de stéarine qui exude en sortie de filière ("die build-up").

Enfin, il faut indiquer qu'au fil des années, l'homme du métier a cherché à fabriquer des carbonates de calcium de plus en plus fins (notamment à travers divers procédés de broyage) développant des surfaces spécifiques de plus en plus importantes. Par voie de conséquence, la quantité d'acide stéarique ou de ses sels mise en oeuvre est de plus en plus élevée, en vue de recouvrir ou de traiter la totalité de la surface de ces carbonates de calcium affinés : ce facteur ne fait donc qu'amplifier les inconvénients précédemment énumérés, et rencontrés dans le cadre de l'utilisation de l'acide stéarique et de ses sels pour traiter le carbonate de calcium.

Aussi, il existe un véritable besoin pour trouver un agent de traitement efficace du carbonate de calcium, en vue de rendre celui-ci compatible avec les matériaux thermoplastiques chlorés auxquels il est destiné, et permettant de diminuer et même d'éliminer complètement l'acide stéarique ou ses sels du procédé de traitement dudit carbonate de calcium.

Poursuivant ses recherches dans cette voie, la Demanderesse a mis au point l'utilisation, comme agent compatibilisant d'une charge minérale, dans un procédé de fabrication d'un matériau thermoplastique chloré contenant au moins une charge minérale, d'au moins un polymère **caractérisé en ce qu**'il est un polymère peigne contenant au moins une fonction oxyde de polyalkylène greffée sur au moins un monomère anionique à insaturation éthylénique.

Cette utilisation permet d'obtenir des charges minérales dont la compatibilité est améliorée avec les matériaux thermoplastiques chlorés dans lesquels elles sont incorporées et ce, tout en diminuant ou en éliminant parfois même la stéarine ou les sels de l'acide stéarique mis en oeuvre dans l'art antérieur. Une application particulière de ces résultats, consiste à augmenter le taux de carbonate de calcium dans un matériau thermoplastique chloré et ce, en utilisant la même quantité d'acide stéarique ou de ses sels que dans l'art antérieur.

Cette compatibilité améliorée en présence des polymères selon l'invention, se traduit directement par l'obtention de propriétés de résistance à l'impact et de brillance améliorées pour le matériau final. En améliorant les propriétés précitées, l'utilisation des polymères selon la présente invention permet de diminuer la quantité de stéarine ou de ses sels mis en oeuvre, parfois même d'éliminer complètement le traitement par la stéarine ou ses sels.

La Demanderesse tient à souligner que l'obtention de propriétés mécaniques améliorées telles que la résistance à l'impact, et de propriétés optiques améliorées telle que la brillance, constituent bien une preuve directe d'une meilleure compatibilité de la charge minérale avec le matériau thermoplastique (en général) dans lequel elle est mise en oeuvre. A cet égard, le document "Study on ground-calcium carbonate and wollastonite composite fillers filling properties and reinforcement mechanisms" (Zhongguo Fenti Jishu, 2002, 8 (1), pp. 1-5) souligne le lien direct entre une résistance à l'impact améliorée pour un matériaux PVC chargé par du carbonate de calcium, et un meilleur état de dispersion dudit carbonate dans la présente résine PVC. De même, le document "Recycling of incompatible plastics with reactive compatibilizers" (Special Publication - Royal Society of Chemistry, 1997, 199 Chemical Aspects of Plastics Recycling, pp. 170-179) indique que les propriétés mécaniques et optiques d'un plastique chargé dépendent du choix de l'agent compatibilisant, et donc du bon état de dispersion de la charge dans ledit plastique. Enfin, le document "Labor-saving method of testing the dispersibility of titanium dioxide Pigments" (FATIPEC Congress (1988), Vol. III(19th), 307-19) relie directement l'état de dispersion de pigments à base de dioxyde de titane dans un film polymérique, avec la brillance dudit film.

Aussi, l'utilisation d'au moins un polymère **caractérisé en ce qu**'il est un polymère peigne contenant au moins une fonction oxyde de polyalkylène greffée sur au moins un monomère anionique à insaturation éthylénique, dans un procédé de fabrication d'un matériau thermoplastique chloré contenant au moins une charge minérale, permet d'améliorer la compatibilité de ladite charge avec la résine thermoplastique chlorée et ce, tout en minimisant voire en éliminant la quantité d'acide stéarique ou de ses sels mise en oeuvre. Une application particulière de ces résultats, consiste à augmenter le taux de carbonate de calcium dans un matériau thermoplastique chloré et ce, en utilisant la même quantité d'acide stéarique ou de ses sels que dans l'art antérieur.

Sans vouloir être liée à une quelconque théorie, la Demanderesse est de l'avis que les polymères mis en oeuvre selon la présente invention favorisent la compatibilité du carbonate de calcium avec une résine thermoplastique chlorée, dans la mesure où la fonction oxyde de polyalkylène greffée présente une bonne affinité vis-à-vis de la résine thermoplastique chlorée d'une part, alors que le squelette dudit polymère à base d'au moins un monomère anionique à insaturation éthylénique présente une bonne affinité vis-à-vis du carbonate de calcium d'autre part.

La Demanderesse tient à souligner que de tels polymères sont déjà connus, mais décrits dans des documents qui ne résolvent pas le même problème technique que celui visé par la présente invention, et pour des fonctions très différentes de celle qui fait l'objet de la présente invention.

Ainsi, dans le domaine du papier, le document WO 2004 / 044022 décrit-il l'utilisation, comme agent améliorant l'activation de l'azurage optique de papiers couchés, d'un copolymère hydrosoluble disposant d'au moins une fonction alkoxy ou hydroxy polyalkylène glycol greffée sur au moins un monomère insaturé éthylénique.

On connaît aussi la Demande Brevet Française n° 05 12797 non encore publiée à la date de dépôt de la présente Demande, et qui décrit un procédé de fabrication de sauces de couchage papetières par introduction dans lesdites sauces d'au moins un polymère peigne obtenu par greffage d'au moins une fonction oxyde de polyalkylène sur la chaîne polymérique, ladite chaîne résultant de la polymérisation d'au moins un monomère insaturé éthylénique ; on obtient alors des sauces de couchage ayant une viscosité Brookfield™ et une rétention d'eau meilleures (plus élevées) qu'avec l'utilisation d'un agent épaississant rétenteur d'eau de l'art antérieur. Les 2 documents précités ne concernent en aucun cas le domaine des plastiques, pas plus que le problème technique posé dans le cas de la présente invention.

Dans le secteur du broyage des matières minérales, on connaît également le document WO 2004 / 041882 qui décrit la mise en oeuvre, comme agent d'aide au broyage, d'un copolymère faiblement ionique et hydrosoluble avec au moins un monomère anionique à insaturation éthylénique, au moins un monomère à insaturation éthylénique non ionique, et au moins un monomère organofluoré ou organosililé. La fonction de ce copolymère, très différente de celle objet de la présente Demande, est celle de faciliter l'action mécanique de broyage, en vue d'obtenir des suspensions aqueuses de matières minérales affinées, de concentration en matière sèche pouvant être élevée, de viscosité Brookfield™ faible et stable dans le temps et ayant une surface pigmentaire dont la charge ionique, déterminée par titration ionique, est faible ; on parvient ainsi à minimiser la demande en agent polymère cationique lors de la fabrication du papier, ce qui constitue le problème technique de base du document WO 2004 / 041882, très éloigné du problème résolu dans la présente Demande. L'homme du métier ne tire donc aucun enseignement de ce document, en vue de résoudre le problème technique visé par la présente Demande.

Enfin, l'homme du métier connaît 2 documents qui résolvent des problèmes techniques différents de celui de la présente Demande, par usage de polymères dont les fonctions sont différentes de celle remplie par les polymères de la présente Demande, mais où on retrouve l'utilisation de carbonate de calcium dans les plastiques. Aussi, l'homme du métier ne tire aucun enseignement de ces documents, en vue de résoudre le problème technique objet de la présente Demande.

Ainsi, l'homme du métier connaît le document WO 2004 / 041883 qui décrit l'utilisation d'un copolymère hydrosoluble et de préférence faiblement ionique, disposant d'au moins une fonction alkoxy ou hydroxy polyalkylène glycol greffée sur au moins un monomère insaturé éthylénique, comme agent améliorant la brillance du produit final et notamment la brillance au niveau de la feuille de papier, quel que soit l'angle de vision, c'est-à-dire un angle compris entre 20° et 85°, et plus particulièrement entre 45° et 75°. Il s'agit donc d'un document essentiellement axé sur le papier. L'homme du métier ne trouve donc dans ce document aucun élément objectif ne lui révélant ou lui suggérant que l'utilisation de tels copolymères permettrait de diminuer la quantité d'acide stéarique ou de ses sels, communément mis en oeuvre lorsqu'on introduit un carbonate de calcium dans un matériau thermoplastique chloré.

En dernier lieu, l'homme du métier connaît aussi la Demande de Brevet n° 05 11274 non encore publiée à la date de dépôt de la présente Demande. Ce document décrit un procédé de fabrication d'une résine thermoplastique chargée par une matière minérale, et contenant éventuellement un modificateur d'impact de nature organique, par introduction dans ladite résine d'un polymère peigne disposant d'au moins un monomère à insaturation éthylénique sur lequel est greffée au moins une fonction oxyde de polyalkylène. Cette invention concerne aussi les matériaux thermoplastiques ainsi obtenus, qui présentent une résistance à l'impact améliorée et une rigidité conservée, par rapport aux mêmes compositions ne contenant pas lesdits polymères peigne. Il existe 2 différences fondamentales entre ce document et la présente invention. Tout d'abord, ce document ne concerne pas le problème de la compatibilité de la charge minérale envers la résine thermoplastique dans laquelle elle est ensuite introduite. Ensuite, il est indiqué expressément, en préambule des exemples qui illustrent la Demande de Brevet n° 05 11274, que l'ensemble des carbonates de calcium utilisés ont subi un traitement au moyen d'un acide gras : ce document ne révèle donc pas qu'on peut diminuer ou même supprimer la quantité mise en oeuvre de cet acide, tout en préservant la compatibilité de la charge pour la résine thermoplastique chlorée dans laquelle elle est mise en oeuvre.

Aussi, un premier objet de l'invention consiste en l'utilisation, comme agent compatibilisant d'une charge minérale, dans un procédé de fabrication d'un matériau thermoplastique chloré contenant au moins une charge minérale, d'au moins un polymère **caractérisé en ce qu**'il est un polymère peigne contenant au moins une fonction oxyde de polyalkylène greffée sur au moins un monomère anionique à insaturation éthylénique.

Cette utilisation est aussi **caractérisée, en ce que** ledit polymère peigne est mis en oeuvre pendant le procédé de fabrication d'un matériau thermoplastique chloré, selon le mode :
1. sous forme de poudre sèche, résultant des étapes de :
   - broyage et / ou dispersion en milieu aqueux de la charge minérale en présence dudit polymère, et éventuellement en présence d'au moins un autre agent de broyage en milieu aqueux et / ou d'au moins un autre agent dispersant,
   - séchage de la dispersion et / ou de la suspension aqueuse de matière minérale obtenue, avec introduction éventuelle dudit polymère, éventuellement traitement puis classification de la poudre obtenue,
2. et / ou sous forme de poudre sèche, résultant des étapes de :
   - broyage à sec de la charge minérale en présence dudit polymère, et éventuellement en présence d'au moins un autre agent de broyage à sec,
   - éventuellement traitement et classification de la poudre obtenue,
3. et / ou sous forme de poudre sèche, résultant des étapes de :
   - introduction dudit polymère dans une dispersion et / ou dans une suspension aqueuse contenant la charge minérale,
   - séchage de la dispersion et / ou de la suspension aqueuse de matière minérale obtenue, avec introduction éventuelle dudit polymère, éventuellement traitement puis classification de la poudre obtenue,
4. et / ou sous forme de poudre sèche, résultant des étapes de :
   - séchage d'une dispersion et / ou d'une suspension aqueuse contenant la charge minérale en présence dudit polymère,
   - éventuellement traitement et classification de la poudre obtenue,
5. et / ou sous forme de poudre sèche, résultant des étapes du séchage d'une solution et / ou d'une émulsion contenant ledit polymère et au moins un autre composé choisi parmi un stabilisant thermique et / ou un stabilisant UV et / ou un lubrifiant et / ou un modificateur de rhéologie et / ou un modificateur d'impact et / ou un agent de processabilité,
6. et / ou sous forme de poudre sèche mélangée avec une résine thermoplastique chlorée et une charge minérale,
et préférentiellement selon le mode 1, et / ou le mode 2, et / ou le mode 3, et / ou le mode 5.

La Demanderesse indique que le terme "traitement" utilisé dans la description de chacun des 6 modes précédents, fait référence à la mise en oeuvre d'un agent de traitement chimique.

Elle tient d'autre part à indiquer que le polymère peigne, lorsqu'il est mis en oeuvre selon un des 6 modes décrits plus haut -à l'exception du mode référencé 6- peut être à l'état de poudre sèche et / ou à l'état liquide c'est-à-dire sous forme d'une émulsion ou d'une suspension aqueuse. Concrètement, c'est sous forme de poudre sèche et / ou sous forme liquide que ledit polymère est ajouté pendant le broyage en milieu humide (mode 1) ou à sec (mode 2), et / ou dans une dispersion ou une suspension aqueuse contenant la charge minérale (mode 3), et / ou pendant le séchage d'une dispersion ou d'une suspension aqueuse contenant la charge minérale (mode 4), et / ou pendant le mélange dudit polymère avec au moins un autre composé choisi parmi un stabilisant thermique et / ou un stabilisant UV et / ou un lubrifiant et / ou un modificateur de rhéologie et / ou un modificateur d'impact et / ou un agent de processabilité (mode 5).

Un autre agent compatibilisant, tel que notamment l'acide stéarique ou ses sels peut être ajouté pendant les étapes de séchage, mais en quantité moindre que dans les procédés décrits dans l'art antérieur, puisqu'il s'agit de l'objectif visé par la présente invention : réduisant la quantité d'acide stéarique ou de ses sels mis en oeuvre et parfois même éliminant ce type de produits, on réduit les inconvénients (tels qu'indiqués auparavant) liés à l'emplois desdits produits et ce, tout en maintenant ou en améliorant la compatibilité de la charge minérale envers la résine thermoplastique chlorée dans laquelle elle est dispersée.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** ledit matériau thermoplastique chloré est destiné à la fabrication de tubes, tels que notamment pour l'adduction d'eau, l'assainissement, l'irrigation, les gaines pour le passage des câbles, ou encore destiné à la fabrication de matériaux de construction extérieurs et / ou intérieurs, tels que notamment des profilés de fenêtres, des volets, des portes, des bardages, des faux plafonds, ou encore destiné à la fabrication de pièces industrielles.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** la charge minérale est choisie parmi le carbonate de calcium naturel ou synthétique, les dolomies, le calcaire, le kaolin, le talc, le gypse, l'oxyde de titane, le blanc satin ou encore le trihydroxyde d'aluminium, le mica, le noir de carbone et les mélanges de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement en ce qu'elle est une charge minérale choisie parmi le carbonate de calcium naturel ou synthétique, le talc et les mélanges de ces charges, très préférentiellement en ce qu'elle est une charge minérale choisie parmi le carbonate de calcium naturel ou synthétique ou leurs mélanges, et de manière extrêmement préférentielle en ce qu'elle est un carbonate de calcium naturel choisi parmi le marbre, la calcite, la craie ou leurs mélanges.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** ledit procédé met en oeuvre :
(a) de 0,1 à 99 % en poids sec d'au moins une résine thermoplastique chlorée, par rapport au poids total de la formulation thermoplastique chlorée,
(b) de 0,1 à 90 % en poids sec d'au moins une charge minérale, par rapport au poids total de la formulation thermoplastique chlorée,
(c) de 0,01 à 5 %, préférentiellement de 0,1 à 3 % en poids sec d'un polymère peigne constitué d'au moins un monomère anionique à insaturation éthylénique sur lequel est greffé au moins une fonction oxyde de polyalkylène, par rapport au poids sec de charge minérale,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, par rapport au poids total de la formulation thermoplastique chlorée,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit polymère peigne, cet agent de compatibilité étant préférentiellement constitué d'au moins un acide gras ayant de 8 à 20 atomes de carbone, cet agent de compatibilité étant très préférentiellement choisi parmi l'acide stéarique et ses sels ou leurs mélanges, le sel de l'acide stéarique étant préférentiellement un sel de calcium.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** ledit polymère peigne contient au moins un monomère de formule (I) : 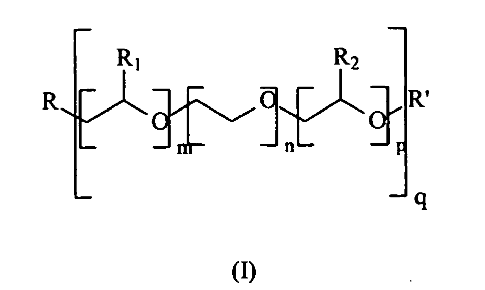 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** ledit polymère peigne se compose :
a) d'au moins un monomère anionique à insaturation éthylénique et à fonction monocarboxylique ou dicarboxylique ou phosphorique ou phosphonique ou sulfonique ou leur mélange,
b) d'au moins un monomère non ionique, le monomère non ionique étant constitué d'au moins un monomère de formule (I) : 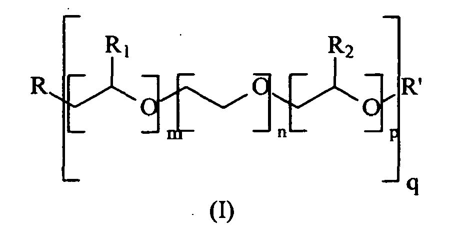 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que préférentiellement les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou du mélange de plusieurs de ces monomères,
d) éventuellement d'au moins un monomère possédant au moins deux insaturations éthyléniques appelé dans la suite de la Demande monomère réticulant.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** ledit polymère peigne est constitué :
a) d'au moins un monomère anionique à insaturation éthylénique et à fonction monocarboxylique choisi préférentiellement parmi l'acide acrylique ou méthacrylique ou encore les hémiesters de diacides tels que les monoesters en C₁ à C₄ des acides maléique ou itaconique, ou choisi parmi les monomères à insaturation éthylénique et fonction dicarboxylique et préférentiellement parmi l'acide itaconique, maléique, ou encore parmi les anhydrides d'acides carboxyliques, tels que préférentiellement l'anhydride maléique ou choisi parmi les monomères à insaturation éthylénique et à fonction sulfonique tels que préférentiellement l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que préférentiellement l'acide vinyl phosphonique, ou les mélanges de ces monomères,
b) d'au moins un monomère à insaturation éthylénique non ionique de formule (I) : 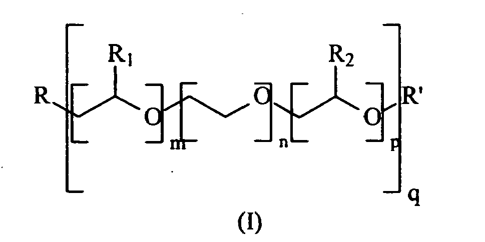 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé, ou de leurs mélanges,
d) éventuellement d'au moins un monomère réticulant choisi préférentiellement dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou de leurs mélanges.

L'utilisation selon l'invention d'au moins un polymère peigne comme agent compatibilisant d'une charge minérale, dans un procédé de fabrication d'un matériau thermoplastique chloré contenant au moins une charge minérale, est aussi **caractérisée en ce que** ledit polymère peigne est constitué, exprimé en poids :
a) de 2 % à 95 %, préférentiellement de 5 % à 50 %, très préférentiellement de 5 % à 25 % d'au moins un monomère anionique à insaturation éthylénique et à fonction monocarboxylique choisi préférentiellement parmi l'acide acrylique ou méthacrylique ou encore les hémiesters de diacides tels que les monoesters en C₁ à C₄ des acides maléique ou itaconique, ou choisi parmi les monomères à insaturation éthylénique et fonction dicarboxylique et préférentiellement parmi l'acide itaconique, maléique, ou encore parmi les anhydrides d'acides carboxyliques, tels que préférentiellement l'anhydride maléique ou choisi parmi les monomères à insaturation éthylénique et à fonction sulfonique tels que préférentiellement l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que préférentiellement l'acide vinyl phosphonique, ou les mélanges de ces monomères,
b) de 2 % à 95 %, préférentiellement de 50 % à 95 %, très préférentiellement de 70 % à 95 % d'au moins un monomère à insaturation éthylénique non ionique de formule (I) : 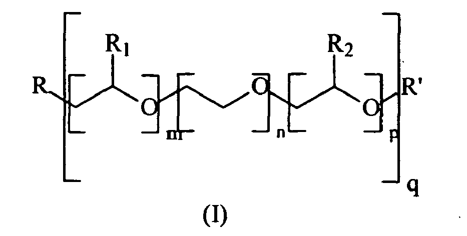 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé, ou de leurs mélanges,
d) de 0 % à 3 % d'au moins un monomère réticulant choisi préférentiellement dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou de leurs mélanges,
le total des proportions des constituants a), b), c), et d) étant égal à 100 %.

Le polymère utilisé selon l'invention est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Ce polymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que préférentiellement pour la fonction monovalente ceux choisis dans le groupe constitué par les cations alcalins, très préférentiellement le sodium, le potassium, le lithium, l'ammonium ou les amines primaires, secondaires ou tertiaires aliphatiques et/ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, ou bien pour la fonction polyvalente ceux choisis préférentiellement dans le groupe constitué par les cations divalents alcalino-terreux, très préférentiellement le magnésium et le calcium, ou encore le zinc, de même que par les cations trivalents, dont très préférentiellement l'aluminium, ou encore par des cations de valence plus élevée.

Chaque agent de neutralisation intervient alors selon des taux de neutralisation propres à chaque fonction de valence.

Selon une autre variante, le polymère issu de la réaction de polymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent permettant l'amélioration de la compatibilité de la charge minérale envers la résine thermoplastique chlorée dans laquelle elle est dispersée.

Selon une autre variante, ledit polymère peut être séché.

Un autre objet de l'invention réside dans un matériau thermoplastique chloré contenant :
(a) au moins une résine thermoplastique chlorée,
(b) au moins une charge minérale,
(c) au moins un agent de compatibilité qui est constitué d'au moins un polymère peigne, contenant au moins une fonction oxyde de polyalkylène greffée sur au moins un monomère anionique à insaturation éthylénique,
(d) éventuellement au moins un autre composé choisi parmi un stabilisant thermique et / ou un stabilisant UV et / ou un lubrifiant et / ou un modificateur de rhéologie et / ou un modificateur d'impact et / ou un agent de processabilité,
(e) éventuellement au moins un autre agent de compatibilité que ledit polymère peigne, cet agent de compatibilité étant préférentiellement constitué d'au moins un acide gras ayant de 8 à 20 atomes de carbone, cet agent de compatibilité étant très préférentiellement choisi parmi l'acide stéarique et ses sels ou leurs mélanges, le sel de l'acide stéarique étant préférentiellement un sel de calcium.

Le matériau thermoplastique chloré selon l'invention est aussi **caractérisé en ce que** la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

Le matériau thermoplastique chloré selon l'invention est aussi **caractérisé en ce qu**'il est destiné à la fabrication de tubes, tels que notamment pour l'adduction d'eau, l'assainissement, l'irrigation, les gaines pour le passage des câbles, ou encore destiné à la fabrication de matériaux de construction extérieurs et / ou intérieurs, tels que notamment des profilés de fenêtres, des volets, des portes, des bardages, des faux plafonds, ou encore destiné à la fabrication de pièces industrielles.

Le matériau thermoplastique chloré selon l'invention est aussi **caractérisé en ce que** la charge minérale est choisie parmi le carbonate de calcium naturel ou synthétique, les dolomies, le calcaire, le kaolin, le talc, le gypse, l'oxyde de titane, le blanc satin ou encore le trihydroxyde d'aluminium, le mica, le noir de carbone et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement en ce qu'elle est une charge minérale choisie parmi le carbonate de calcium naturel ou synthétique, le talc et les mélanges de ces charges, très préférentiellement en ce qu'elle est une charge minérale choisie parmi le carbonate de calcium naturel ou synthétique ou leurs mélanges, et de manière extrêmement préférentielle en ce qu'elle est un carbonate de calcium naturel choisi parmi le marbre, la calcite, la craie ou leurs mélanges.

Le matériau thermoplastique chloré selon l'invention est aussi **caractérisé en ce qu**'il contient :
(a) de 0,1 à 99 % en poids sec d'au moins une résine thermoplastique chlorée, par rapport au poids total de la formulation thermoplastique,
(b) de 0,1 à 90 % en poids sec d'au moins une charge minérale, par rapport au poids total de la formulation thermoplastique chlorée,
(c) de 0,01 à 5 %, préférentiellement 0,1 à 3 % en poids sec d'un polymère peigne constitué d'au moins un monomère anionique à insaturation éthylénique sur lequel est greffé au moins une fonction oxyde de polyalkylène, par rapport au poids sec de charge minérale,
(d) de 0 à 20 %, préférentiellement de 5 à 20 % en poids sec d'un stabilisant thermique .et / ou d'un stabilisant UV et / ou d'un lubrifiant et / ou d'un modificateur de rhéologie et / ou d'un modificateur d'impact et / ou d'un agent de processabilité, par rapport au poids total de la formulation thermoplastique chlorée,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit polymère peigne, cet agent de compatibilité étant préférentiellement constitué d'au moins un acide gras ayant de 8 à 20 atomes de carbone, cet agent de compatibilité étant très préférentiellement choisi parmi l'acide stéarique et ses sels ou leurs mélanges, le sel de l'acide stéarique étant préférentiellement un sel de calcium.

Le matériau thermoplastique chloré selon l'invention est aussi **caractérisé en ce que** le polymère peigne utilisé comme agent compatibilisant contient au moins un monomère de formule (I) : 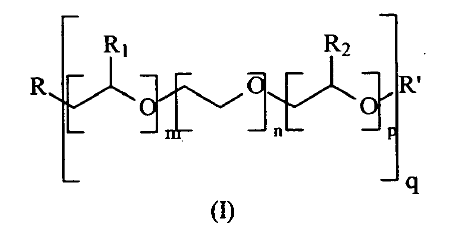 dans laquelle:
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone.

Le matériau thermoplastique chloré selon l'invention est aussi **caractérisé en ce que** le polymère peigne utilisé comme agent compatibilisant se compose :
(a) d'au moins un monomère anionique à insaturation éthylénique et à fonction monocarboxylique ou dicarboxylique ou phosphorique ou phosphonique ou sulfonique ou leur mélange,
(b) d'au moins un monomère non ionique, le monomère non ionique étant constitué d'au moins un monomère de formule (I) : 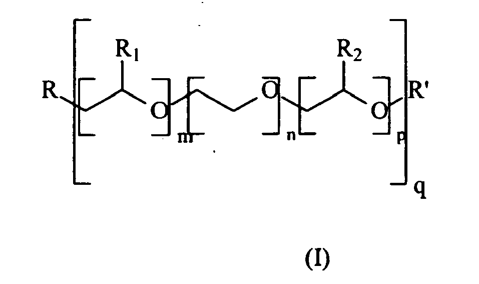 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
(c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré ou organosililé, ou de leurs mélanges,
(d) éventuellement d'au moins un monomère réticulant.

Le matériau thermoplastique chloré selon l'invention est aussi **caractérisé en ce que** le polymère peigne utilisé comme agent compatibilisant est constitué :
a) d'au moins un monomère anionique à insaturation éthylénique et à fonction monocarboxylique choisi préférentiellement parmi l'acide acrylique ou méthacrylique ou encore les hémiesters de diacides tels que les monoesters en C₁ à C₄ des acides maléique ou itaconique, ou choisi parmi les monomères à insaturation éthylénique et fonction dicarboxylique et préférentiellement parmi l'acide itaconique, maléique, ou encore parmi les anhydrides d'acides carboxyliques, tels que préférentiellement l'anhydride maléique ou choisi parmi les monomères à insaturation éthylénique et à fonction sulfonique tels que préférentiellement l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que préférentiellement l'acide vinyl phosphonique, ou les mélanges de ces monomères,
b) d'au moins un monomère à insaturation éthylénique non ionique de formule (I) : 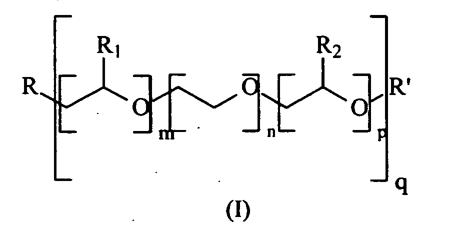 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé ou de leurs mélanges,
d) éventuellement d'au moins un monomère réticulant choisi préférentiellement dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou de leurs mélanges.

Le matériau thermoplastique chloré selon l'invention est aussi **caractérisé en ce que** le polymère peigne utilisé comme agent compatibilisant est constitué, exprimé en poids :
a) de 2 % à 95 %, préférentiellement de 5 % à 50 %, très préférentiellement de 5 % à 25 % d'au moins un monomère anionique à insaturation éthylénique et à fonction monocarboxylique choisi préférentiellement parmi l'acide acrylique ou méthacrylique ou encore les hémiesters de diacides tels que les monoesters en C₁ à C₄ des acides maléique ou itaconique, ou choisi parmi les monomères à insaturation éthylénique et fonction dicarboxylique et préférentiellement parmi l'acide itaconique, maléique, ou encore parmi les anhydrides d'acides carboxyliques, tels que préférentiellement l'anhydride maléique ou choisi parmi les monomères à insaturation éthylénique et à fonction sulfonique tels que préférentiellement l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que préférentiellement l'acide vinyl phosphonique, ou les mélanges de ces monomères,
b) de 2 % à 95, préférentiellement de 50 % à 95 %, très préférentiellement de 70 % à 95 % d'au moins un monomère à insaturation éthylénique non ionique de formule (I) : 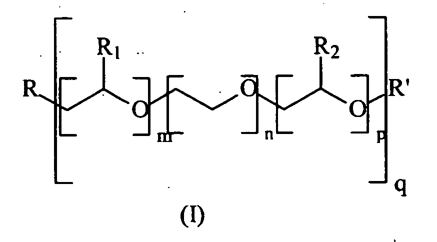 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé ou de leurs mélanges,
d) de 0 % à 3 % d'au moins un monomère réticulant choisi préférentiellement dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou de leurs mélanges,
le total des proportions des constituants a), b), c), et d) étant égal à 100 %.

Le polymère utilisé selon l'invention est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Ce polymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que préférentiellement pour la fonction monovalente ceux choisis dans le groupe constitué par les cations alcalins, très préférentiellement le sodium, le potassium, le lithium, l'ammonium ou les amines primaires, secondaires ou tertiaires aliphatiques et/ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, ou bien pour la fonction polyvalente ceux choisis préférentiellement dans le groupe constitué par les cations divalents alcalino-terreux, très préférentiellement le magnésium et le calcium, ou encore le zinc, de même que par les cations trivalents, dont très préférentiellement l'aluminium, ou encore par des cations de valence plus élevée.

Chaque agent de neutralisation intervient alors selon des taux de neutralisation propres à chaque fonction de valence.

Selon une autre variante, le polymère issu de la réaction de polymérisation peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au polymère utilisé selon l'invention.

Selon une autre variante, ledit polymère peut aussi être séché.

La portée et l'intérêt de l'invention seront mieux perçus grâce aux exemples suivants qui ne sauraient être limitatifs.

### EXEMPLES

Dans tous les exemples, le poids moléculaire des polymères mis en oeuvre est déterminé selon la méthode explicitée ci-dessous, par Chromatographie d'Exclusion Stérique (CES).

1 ml de la solution de polymère est mise sur une coupelle, qui est ensuite évaporée à température ambiante sous vide de pompe à palettes. Le soluté est repris par 1 ml de l'éluant de la CES, et l'ensemble est ensuite injecté dans l'appareil de CES. L'éluant de la CES est une solution de NaHCO₃ : 0,05 mol/l, NaNO₃ : 0,1 mol/l, triéthylamine 0,02 mol/l, NaN₃ 0,03 % massique. La chaîne de CES contient une pompe isocratique (Waters™ 515) dont le débit est réglé à 0,5 ml/min, un four contenant une précolonne de type "Guard Column Ultrahydrogel Waters™", une colonne linéaire de 7,8 mm de diamètre interne et 30 cm de longueur de type "Ultrahydrogel Waters™" et un détecteur réfractométrique de type RI Waters™ 410. Le four est porté à la température de 60°C et le réfractomètre à 50°C. Le logiciel de détection et de traitement du chromatogramme est le logiciel SECential, fourni par "L.M.O.P.S. CNRS, Chemin du Canal, Vemaison, 69277". La CES est étalonnée par une série de 5 étalons de poly(acrylate) de sodium fourni par Polymer Standards Service™.

### EXEMPLE 1

Cet exemple illustre l'utilisation de polymères peigne selon la présente invention, dans un procédé de fabrication de matériaux thermoplastiques chlorés, destinés à la fabrication de matériaux de construction qui sont des profilés de fenêtres.

Cet exemple illustre aussi les matériaux thermoplastiques chlorés obtenus selon la présente invention.

Ces matériaux thermoplastiques chlorés contiennent une résine PVC, du carbonate de calcium, et un polymère peigne. Le carbonate de calcium et le polymère peigne ont été introduits sous forme de poudre sèche résultant d'une étape de broyage en milieu aqueux du carbonate de calcium en présence dudit polymère, et séchage de la suspension obtenue en présence d'acide stéarique (mode 1).

La référence est constituée par la même composition thermoplastique chlorée dans laquelle le carbonate de calcium a été broyé avec un agent de broyage de l'art antérieur, puis séché en présence de stéarine, la quantité de stéarine mise en oeuvre étant plus importante que dans l'invention.

Cet exemple met en oeuvre 16 parts en poids sec de carbonate de calcium pour 100 parts en poids sec de résine PVC.

### Composition des matériaux thermoplastiques chlorés

Pour chacun des essais n° 1 et 2, les compositions thermoplastiques chlorées fabriquées mettent en oeuvre :
- une résine PVC commercialisée par la société ARKEMA™ sous le nom Lacovyl™ S110P,
- du dioxyde de titane commercialisé par la société KRONOS™ sous le nom Kronos™ 2200,
- un stabilisant thermique commercialisé par la société BARLOCHER™ sous le nom One Pack Baeropan™,
- un lubrifiant commercialisé par la société LAPASSE ADDITIVES CHEMICALS™ sous le nom Lacowax™ EP,
- un additif modificateur de choc organique de type coeur-écorce commercialisé par la société ARKEMA™ sous le nom Durastrength™ 320,
- du carbonate de calcium sous forme de poudre dont la fabrication est explicitée plus avant,
- un polymère peigne selon l'invention ou un agent de broyage de l'art antérieur, dont la nature est explicitée plus avant.

Les quantités mises en oeuvre ont été indiquées dans le tableau 1.

### Obtention des poudres sèches de carbonate de calcium

Les suspensions aqueuses de carbonate de calcium obtenues par broyage avec des agents d'aide au broyage de l'art antérieur ou un polymère peigne selon l'invention ont été séchées sous forme de poudre au moyen d'une fontaine sécheur de type Niro Minor Mobile 2000 commercialisée par la société NIRO™.

Les caractéristiques de ce séchage sont :
- température d'entrée du gaz : 350°C,
- température de sortie du gaz : 102-105°C,
- ventilation ouverte à 99 %,
- pression d'air : 4 bars.

### Fabrication des mélanges secs de PVC

Pour chacun des essais n° 1 et 2, on commence par réaliser le mélange des différents constituants qui rentrent dans la composition des matériaux thermoplastiques chlorés. De tels mélanges sont réalisés selon les méthodes bien connues de l'homme du métier.

### Extrusion des mélanges secs de PVC

Tous les mélanges secs ont été extrudés avec un système Thermoelectron Polylab™ équipée d'une bi-vis et d'une filière plate (25 mm x 3 mm).

Les profilés PVC sont ensuite calibrés à 15°C dans un bain d'eau et laminés sur un système Yvroud. Les paramètres d'extrusion sont :
- température des 4 zones : 170-180-185-190°C,
- vitesse des vis : 30 tours par minute.

### Mesure des résistances au choc

Les mesures de résistance au choc sont réalisées selon la norme British Standard BS 7413 : 2003. Les mesures ont été moyennées sur des lots de 10 éprouvettes fabriquées avec la machine Diadisc™ 4200 commercialisée par la société MUTRONIC™.

### Mesure de brillance

Les mesures de brillance ont été réalisées à 60° au moyen d'un spectrophotomètre Tri-Gloss commercialisé par la société BYK-GARDNER™.

### Essai n° 1

Cet essai illustre l'art antérieur.

Il met en oeuvre une suspension aqueuse de carbonate de calcium, dont 78 % en poids des particules ont un diamètre inférieur à 1 µm tel que mesuré par un appareil de type Sedigraph™ 5100 commercialisé par la société MICROMERITICS™, et obtenue par broyage en milieu humide du carbonate de calcium avec 0,7 % en poids sec par rapport au poids sec de carbonate d'un homopolymère acrylique de l'art antérieur.

Ladite suspension a été séchée selon la méthode précédemment décrite, en présence de 1,5 % en poids sec d'acide stéarique par rapport au poids sec de carbonate de calcium.

### Essai n° 2

Cet essai illustre l'invention.

Il met en oeuvre une suspension aqueuse de carbonate de calcium dont 72 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,45 % en poids sec d'acide stéarique par rapport au poids sec de carbonate de calcium.

La composition des formulations des essais 1 et 2, ainsi que les valeurs de résistance à l'impact et de brillance obtenues sont indiquées dans le tableau 1.

**Tableau 1 : composition des différentes formulations thermoplastiques chlorées et valeurs de brillance et des résistances à l'impact correspondantes**

| **Essai n°** | **1** | **2** |
|---|---|---|
| Art Antérieur / Invention (AA / IN) | AA | IN |
| Lacovyl™ | 100 | 100 |
| Kronos™ 2200 | 5 | 5 |
| One Pack Baeropan™ | 2,5 | 2,5 |
| Lacowax™ | 0,05 | 0,05 |
| Durastrength™ | 6 | 6 |
| Carbonate de calcium broyé selon l'art antérieur | 16 | 0 |
| Carbonate de calcium broyé selon l'invention | 0 | 16 |
| Acide stéarique* | 1,5 | 0,45 |
| Impact (kJ/m²) | 20,4 | 70,4 |
| Brillance | 65,2 | 73,1 |

| | | |
|---|---|---|
| Les % de polymères s'entendent en poids sec de polymère par rapport au poids sec de carbonate de calcium % en poids sec d'acide stéarique par rapport au poids sec de carbonate de calcium. | | |

Le comportement observé pour l'essai n° 1 au niveau du test de résistance à l'impact, est un comportement du type fragile, alors qu'on observe un comportement de type ductile pour l'essai n° 2.

Les résultats du tableau 1 démontrent que la résistance à l'impact est améliorée dans le cas de l'invention, c'est-à-dire par l'utilisation du polymère selon l'invention qui permet de réduire la quantité d'acide stéarique mise en oeuvre, celle-ci étant divisée par 2.

Les résultats du tableau 1 démontrent également que le brillant est amélioré dans le cas de l'invention, c'est-à-dire par l'utilisation du polymère selon l'invention qui permet de réduire la quantité d'acide stéarique mise en oeuvre.

Ces résultats sont d'autant plus surprenants que, la granulométrie du carbonate de calcium mis en oeuvre dans l'essai 1 étant plus fine que dans l'essai 2, l'homme du métier se serait attendu à obtenir une résistance à l'impact et une brillance plus élevées dans l'essai 1 que dans l'essai 2.

Ces résultats démontrent donc que, l'utilisation du polymère selon l'invention permet d'améliorer la compatibilité du carbonate de calcium avec la résine PVC, tout en réduisant notablement la quantité d'acide stéarique mis en oeuvre.

### EXEMPLE 2

Cet exemple illustre l'utilisation de polymères peigne selon la présente invention, dans un procédé de fabrication de matériaux thermoplastiques chlorés, destinés à la fabrication de matériaux de construction qui sont des profilés de fenêtres.

Cet exemple illustre aussi les matériaux thermoplastiques chlorés obtenus selon la présente invention.

Ces matériaux thermoplastiques chlorés contiennent une résine PVC et du carbonate de calcium. Le carbonate de calcium et le polymère peigne ont été introduits sous forme de poudre sèche résultant :
- d'une étape de broyage en milieu aqueux du carbonate de calcium en présence dudit polymère, et séchage de la suspension obtenue, en présence d'acide stéarique (mode 1),
- ou d'une étape de mélange dudit polymère avec la suspension de carbonate de calcium qui a été broyée au préalable avec un polymère acrylique de l'art antérieur, et séchage de la suspension obtenue, sans acide stéarique (mode 3).

La référence est constituée par la même composition thermoplastique chlorée dans laquelle le carbonate de calcium a été broyé avec un polymère acrylique de l'art antérieur, puis séché en présence de stéarine, la quantité de stéarine mise en oeuvre étant plus importante que dans tous les essais illustrant l'invention.

Cet exemple met en oeuvre 8 parts en poids sec de carbonate de calcium pour 100 parts en poids sec de résine PVC.

Pour chacun des essais n° 3 à 11, les compositions thermoplastiques chlorées fabriquées mettent en oeuvre les mêmes constituants que dans l'exemple 1, les quantités mises en oeuvre étant indiquées dans le tableau 2.

Les poudres sèches de carbonate de calcium ont été séchées selon le même protocole que celui décrit dans l'exemple 1.

Les mélanges de PVC secs sont fabriqués comme dans l'exemple 1, puis extrudés selon l'exemple 1.

De même, les résistances au choc sont déterminées comme dans l'exemple 1.

### Essai n° 3

Cet essai illustre l'art antérieur.

Il met en oeuvre une suspension aqueuse de carbonate de calcium, dont 67 % en poids des particules ont un diamètre inférieur à 1 µm tel que mesuré par un appareil de type Sedigaph™ 5100 commercialisé par la société MICROMERITICS™, et obtenue par broyage en milieu humide de carbonate de calcium avec 0,7 % en poids sec par rapport au poids sec de carbonate d'un homopolymère acrylique de l'art antérieur.

Ladite suspension a été séchée selon la méthode précédemment décrite, en présence de 1,1 % en poids sec d'acide stéarique par rapport au poids sec de carbonate de calcium.

### Essai n° 4

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de :
- 78 % en poids de méthacrylate de méthoxy polyéthylène glycol de poids moléculaire 5 000 g/mol,
- 4 % d'acide acrylique,
- 18 % d'acide méthacrylique.
et totalement neutralisé par la soude.

Ladite suspension a été séchée selon la méthode précédemment décrite, sans acide stéarique.

### Essai n° 5

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, sans acide stéarique.

### Essai n° 6

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,45 % en poids sec d'acide stéarique par rapport au poids sec de carbonate de calcium.

### Essai n° 7

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,90 % en poids sec d'acide stéarique par rapport au poids sec de carbonate de calcium.

### Essai n° 8

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,5 % en poids sec par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, sans acide stéarique.

### Essai n° 9

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,5 % en poids sec par rapport au poids sec de carbonate de calcium, d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,45 % en poids sec d'acide stéarique par rapport au poids sec de carbonate de calcium.

### Essai n° 10

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un homopolymère de l'acide acrylique, puis par mélange à la suspension obtenue d'un polymère peigne de poids moléculaire 42 400 g/mol, obtenu par un procédé de polymérisation radicalaire contrôlée dans l'eau de :
- 71,5 % en poids de méthacrylate de méthoxy polyéthylène glycol de poids moléculaire 5 000 g/mol,
- 2,9 % d'hémimaléate de butoxypolyoxypropylène comportant 19 motifs d'oxypropylène,
- 4,9 % de méthacrylate d'éthylène glycol,
- 20,7 % de phosphate d'éthylène glycol ayant 6 motifs d'oxyde d'éthylène,
et totalement neutralisé par la soude.

Ladite suspension a été séchée selon la méthode précédemment décrite, sans acide stéarique.

### Essai n° 11

Cet essai illustre l'invention.

Il met en oeuvre une suspension aqueuse de carbonate de calcium dont 67 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un homopolymère de l'acide acrylique, puis par mélange à la suspension obtenue d'un polymère peigne de poids moléculaire 35 000 g/mol, obtenu par un procédé de polymérisation radicalaire contrôlée dans l'eau de :
- 78 % en poids de méthacrylate de méthoxy polyéthylène glycol de poids moléculaire 5 000 g/mol,
- 4 % d'acide acrylique,
- 18 % d'acide méthacrylique,
et totalement neutralisé par la soude.

Ladite suspension a été séchée selon la méthode précédemment décrite, sans acide stéarique.

La composition des formulations des essais 3 à 11, ainsi que les valeurs de résistance à l'impact et de brillance obtenues sont indiquées dans le tableau 2.

**Tableau 2 : composition des différentes formulations thermoplastiques chlorées et valeurs des résistances à l'impact correspondantes**

| **Essai n°** | **3** | **4** | **5** | **6** | **7** | **8** | **9** | **10** | **11** |
|---|---|---|---|---|---|---|---|---|---|
| Art Antérieur / Invention (AA / IN) | AA | IN | IN | IN | IN | IN | IN | IN | IN |
| Lacovyl™ | 100 | 100 | 100 | 100 | 100 | 100 | 100 | 100 | 100 |
| Kronos™ 2200 | 5 | 5 | 5 | 5 | 5 | 5 | 5 | 5 | 5 |
| One Pack Baeropan™ | 2,5 | 2,5 | 2,5 | 2,5 | 2,5 | 2,5 | 2,5 | 2,5 | 2,5 |
| Lacowax™ | 0,05 | 0,05 | 0,05 | 0,05 | 0,05 | 0,05 | 0,05 | 0,05 | 0,05 |
| Durastrength™ | 6 | 6 | 6 | 6 | 6 | 6 | 6 | 6 | 6 |
| Carbonate de calcium broyé avec 0,7 % de polymère selon l'art antérieur | 8 | 0 | 0 | 0 | 0 | 0 | 0 | 0 | 0 |
| Carbonate de calcium broyé avec 0,7 % de polymère selon l'invention | 0 | 8 | 8 | 8 | 8 | 0 | 0 | 0 | 0 |
| Carbonate de calcium broyé avec 0,5 % de polymère selon l'invention | 0 | 0 | 0 | 0 | 0 | 8 | 8 | 0 | 0 |
| Carbonate de calcium broyé avec 0,7 % de polymère selon l'art antérieur puis ajout de 0,7 % de polymère selon l'invention | 0 | 0 | 0 | 0 | 0 | 0 | 0 | 8 | 8 |
| Acide stéarique* | 1,10 | 0 | 0 | 0,45 | 0,90 | 0 | 0,45 | 0 | 0 |
| Impact (kJ/m²) | 20,0 | 25,3 | 24,6 | 23,2 | 25,0 | 22,5 | 25,8 | 24,4 | 25,0 |
| Brillance | 58 | 61,4 | 63,5 | 72,9 | 75,0 | 61,0 | 66,5 | 59,0 | 58,4 |

| | | | | | | | | | |
|---|---|---|---|---|---|---|---|---|---|
| Les % de polymères s'entendent en poids sec de polymère par rapport au poids sec de carbonate de calcium * % en poids sec d'acide stéarique par rapport au poids sec de carbonate de calcium. | | | | | | | | | |

Toutes les ruptures sont des ruptures de type fragile.

Les résultats du tableau 2 démontrent que l'utilisation des polymères selon l'invention pendant l'étape de broyage, en quantité équivalente avec l'art antérieur, conduit à des résistances à l'impact et des brillances meilleures que pour l'art antérieur (essais 4, 5, 6 et 7 comparés à l'essai 3) et ce, pour des quantités d'acide stéarique plus faibles que dans l'art antérieur. Les essais 4 et 5 démontrent même que l'emploi des polymères selon l'invention, pendant l'étape de broyage, permet de supprimer complètement le traitement à l'acide stéarique.

Le tableau 2 démontre aussi que l'utilisation des polymères selon l'invention pendant l'étape de broyage, dans une quantité moindre que celle mise en oeuvre dans l'art antérieur, conduit à des résistances à l'impact et des brillances plus élevées que pour l'art antérieur (essais 8 et 9 comparés à l'essai 3) et ce, pour des quantités d'acide stéarique plus faibles que pour l'art antérieur.

Le tableau 2 démontre enfin que l'utilisation des polymères selon l'invention pendant une étape de mélange avec du carbonate de calcium préalablement broyé avec un polymère de l'art antérieur, conduit à des résistances à l'impact et des brillances plus élevées que pour l'art antérieur (essais 10 et 11 comparés à l'essai 3) et ce, tout en supprimant complètement le traitement à l'acide stéarique.

Ces résultats démontrent donc que l'utilisation du polymère selon l'invention permet d'améliorer la compatibilité du carbonate de calcium avec la résine PVC, tout en réduisant notablement la quantité d'acide stéarique mis en oeuvre, voire en supprimant totalement l'acide stéarique.

### EXEMPLE 3

Cet exemple illustre l'utilisation de polymères peigne selon la présente invention, dans un procédé de fabrication de matériaux thermoplastiques chlorés, destinés à la fabrication de matériaux de construction qui sont des profilés de fenêtres.

Cet exemple illustre aussi les matériaux thermoplastiques chlorés obtenus selon la présente invention.

Ces matériaux thermoplastiques chlorés contiennent une résine PVC, du carbonate de calcium, et un polymère peigne. Le carbonate de calcium et le polymère peigne ont été introduits sous forme de poudre sèche résultant d'une étape de mélange dudit polymère avec la suspension de carbonate de calcium qui a été broyée au préalable avec un agent de broyage de l'art antérieur, et séchage de la suspension obtenue, éventuellement en présence d'acide stéarique (mode 3).

La référence est constituée par la même composition thermoplastique chlorée dans laquelle le carbonate de calcium a été broyé avec le même agent de broyage de l'art antérieur, puis séché en présence de stéarine, la quantité de stéarine mise en oeuvre étant plus importante que dans tous les essais illustrant l'invention.

Cet exemple met en oeuvre 8 parts en poids sec de carbonate de calcium pour 100 parts en poids sec de résine PVC.

La différence entre cet exemple et l'exemple 2 réside dans la granulométrie du carbonate de calcium mis en oeuvre.

Pour chacun des essais n° 12 à 15, les compositions thermoplastiques chlorées fabriquées mettent en oeuvre les mêmes constituants que dans l'exemple 1, les quantités mises en oeuvre étant indiquées dans le tableau 2.

Les poudres sèches de carbonate de calcium ont été séchées selon le même protocole que celui décrit dans l'exemple 1.

Les mélanges de PVC secs sont fabriqués comme dans l'exemple 1, puis extrudés selon l'exemple 1.

De même, les résistances au choc sont déterminées comme dans l'exemple 1.

### Essai n° 12

Cet essai illustre l'art antérieur.

Il met en oeuvre une suspension aqueuse de carbonate de calcium, dont 78 % en poids des particules ont un diamètre inférieur à 1 µm tel que mesuré par un appareil de type Sedigraph™ 5100 commercialisé par la société MICROMERITICS™, et obtenue par broyage en milieu humide de carbonate de calcium avec 0,7 % en poids sec par rapport au poids sec de carbonate d'un homopolymère acrylique de l'art antérieur.

Ladite suspension a été séchée selon la méthode précédemment décrite, en présence de 1,1 % en poids sec d'acide stéarique par rapport au poids sec de carbonate de calcium.

### Essai n° 13

Cet essai illustre l'invention.

Il met en oeuvre une suspension aqueuse de carbonate de calcium dont 78 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un homopolymère acrylique de l'art antérieur, puis par mélange d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, sans acide stéarique.

### Essai n° 14

Cet essai illustre l'invention.

Il met en oeuvre une suspension aqueuse de carbonate de calcium dont 78 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un homopolymère acrylique de l'art antérieur, puis par mélange d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, sans en présence de 0,45 % en poids sec d'acide stéarique par rapport au poids sec de carbonate de calcium.

### Essai n° 15

Cet essai illustre l'invention.

Il met en oeuvre une suspension aqueuse de carbonate de calcium dont 78 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un homopolymère acrylique de l'art antérieur, puis par mélange d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,90 % en poids sec d'acide stéarique par rapport au poids sec de carbonate de calcium.

La composition des formulations des essais 12 à 15, ainsi que les valeurs de résistance à l'impact et de brillance obtenues sont indiquées dans le tableau 3.

**Tableau 3 : composition des différentes formulations thermoplastiques chlorées et valeurs des résistances à l'impact et des brillances correspondantes**

| **Essai n°** | **12** | **13** | **14** | **15** |
|---|---|---|---|---|
| Art Antérieur / Invention (AA / IN) | AA | IN | IN | IN |
| Lacovyl™ | 100 | 100 | 100 | 100 |
| Kronos™ 2200 | 5 | 5 | 5 | 5 |
| One Pack Baeropan™ | 2,5 | 2,5 | 2,5 | 2,5 |
| Lacowax™ | 0,05 | 0,05 | 0,05 | 0,05 |
| Durastrength™ | 6 | 6 | 6 | 6 |
| Carbonate de calcium broyé avec 0,7 % de polymère selon l'art antérieur | 8 | 0 | 0 | 0 |
| Carbonate de calcium broyé avec 0,7 % de polymère selon l'invention | 0 | 8 | 8 | 8 |
| Acide stéarique* | 1,1 | 0 | 0,45 | 0,90 |
| Impact (kJ/m²) | 21,5 | 22,3 | 22,6 | 21,9 |
| Brillance | 71,4 | 73,6 | 75,1 | 76,7 |

| | | | | |
|---|---|---|---|---|
| Les % de polymères s'entendent en poids sec de polymère par rapport au poids sec de carbonate de calcium * % en poids sec d'acide stéarique par rapport au poids sec de carbonate de calcium. | | | | |

Toutes les ruptures sont des ruptures de type fragile.

Les résultats du tableau 3 démontrent que l'utilisation des polymères selon l'invention pendant l'étape de broyage, en quantité équivalente avec l'art antérieur, conduit à des résistances à l'impact et des brillances améliorées par rapport à l'art antérieur (essais 13, 14 et 15 comparés à l'essai 12) et ce, pour des quantités d'acide stéarique plus faibles que dans l'art antérieur.

L'essai 13 démontre même que l'emploi des polymères selon l'invention, pendant l'étape de broyage, permet de supprimer complètement le traitement à l'acide stéarique.

Ces résultats démontrent donc que, l'utilisation du polymère selon l'invention permet d'améliorer la compatibilité du carbonate de calcium avec la résine PVC, tout en réduisant notablement la quantité d'acide stéarique mis en oeuvre, voire en supprimant totalement l'acide stéarique.

### EXEMPLE 4

Cet exemple illustre l'utilisation de polymères peigne selon la présente invention, dans un procédé de fabrication de matériaux thermoplastiques chlorés, destinés à la fabrication de matériaux de construction qui sont des bardages pour fenêtres.

Cet exemple illustre aussi les matériaux thermoplastiques chlorés selon la présente invention.

Ces matériaux thermoplastiques chlorés contiennent une résine PVC, du carbonate de calcium, et un polymère peigne. Le carbonate de calcium et le polymère peigne ont été introduits sous forme de poudre sèche résultant d'une étape de mélange après broyage en milieu aqueux du carbonate de calcium, et séchage de la suspension obtenue, en présence d'acide stéarique (mode 3).

La référence est constituée par la même composition thermoplastique chlorée contenant le carbonate de calcium broyé avec un agent de broyage de l'art antérieur, puis séché en présence de stéarine, la quantité de stéarine mise en oeuvre étant plus importante que dans tous les essais illustrant l'invention.

Cet exemple met en oeuvre 20 parts en poids sec de carbonate de calcium pour 100 parts en poids sec de résine PVC.

Les poudres sèches de carbonate de calcium ont été séchées selon le même protocole que celui décrit dans l'exemple 1.

Les mélanges de PVC secs sont fabriqués comme dans l'exemple 1, puis extrudés au moyen d'une extrudeuse Haake™. Les paramètres d'extrusion sont :
- température des 4 zones : 170-180-185-190°C,
- vitesse des vis : 30 tours par minute.

Les résistances à l'impact sont déterminées selon un test dit "test Gardner" effectué selon la norme ASTM D4226.

Pour chacun des essais n° 16 à 18, les compositions thermoplastiques chlorées fabriquées mettent en oeuvre :
- une résine PVC Georgia Gulf™1091,
- un stabilisant thermique Thermolite™ 176 commercialisé par la société ARKEMA™,
- une cire de polyéthylène Licolube™ commercialisée par la société CLARIANT™,
- une cire polyéthylène oxydée AC 629 A commercialisée par HONEYWELL",
- du stéarate de calcium,
- un agent de processabilité K120N commercialisé par ROHM & HAAS™,
- un modificateur d'impact Paraloid™ commercialisé par ROHM & HAAS™,
- un dioxyde de titane R-960 commercialisé par DUPONT™,
- du carbonate de calcium sous forme de poudre dont la fabrication est explicitée plus avant,
- un polymère peigne selon l'invention ou un polymère acrylique de l'art antérieur, dont la nature est explicitée plus avant.

Les quantités mises en oeuvre ont été indiquées dans le tableau 4.

### Essai n° 16

Cet essai illustre l'art antérieur.

Il met en oeuvre une suspension aqueuse de carbonate de calcium, dont 65 % en poids des particules ont un diamètre inférieur à 1 µm tel que mesuré par un appareil de type Sedigraph™ 5100 commercialisé par la société MICROMERITICS™, et obtenue par broyage en milieu humide de carbonate de calcium avec 0,4 % en poids sec par rapport au poids sec de carbonate d'un homopolymère acrylique de l'art antérieur. Ladite suspension a été séchée selon la méthode précédemment décrite, en présence de 1,25 % en poids sec d'acide stéarique par rapport au poids sec de carbonate de calcium.

### Essai n° 17

Cet essai illustre l'invention.

Il met en oeuvre une suspension aqueuse de carbonate de calcium dont 65 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,4 % en poids sec par rapport au poids sec de carbonate de calcium, d'un polymère acrylique de l'art antérieur, puis mélange avec 0,75 % en poids sec par rapport au poids sec de carbonate de calcium d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,45 % en poids sec d'acide stéarique par rapport au poids sec de carbonate de calcium.

### Essai n° 18

Cet essai illustre l'invention.

Il met en oeuvre une suspension aqueuse de carbonate de calcium dont 65 % en poids des particules ont un diamètre inférieur à 1 µm tel que mesuré par un appareil de type Sedigraph™ 5100 commercialisé par la société MICROMERITICS™, obtenue par broyage du carbonate de calcium avec 0,7 % en poids sec par rapport au poids sec de carbonate de calcium, d'un polymère acrylique de l'art antérieur, puis mélange avec 0,85 % en poids sec par rapport au poids sec de carbonate de calcium d'un polymère peigne de poids moléculaire 35 000 g/mol, obtenu par un procédé de polymérisation radicalaire contrôlée dans l'eau de :
- 92 % en poids de méthacrylate de méthoxy polyéthylène glycol de poids moléculaire 5 000 g/mol,
- 8 % d'acide acrylique,
et totalement neutralisé par la soude.

Ladite suspension a été séchée selon la méthode précédemment décrite, en présence de 0,45 % en poids sec d'acide stéarique par rapport au poids sec de carbonate de calcium.

La composition des formulations des essais 16 à 18, ainsi que les valeurs de résistance à l'impact mesurées à -10°C, 0°C et 23°C sont indiquées dans le tableau 4.

**Tableau 4 : composition des différentes formulations thermoplastiques chlorées et valeurs des résistances à l'impact correspondantes**

| **Essai n°** | **16** | **17** | **18** |
|---|---|---|---|
| Art Antérieur / Invention (AA / IN) | AA | IN | IN |
| Résine PVC | 100 | 100 | 100 |
| Thermolite™ | 1 | 1 | 1 |
| Stéarate de calcium | 1,5 | 1,5 | 1,5 |
| Licolube™ | 0,8 | 0,8 | 0,8 |
| AC 629 A | 0,1 | 0,1 | 0,1 |
| K120N 1 | | 1 | 1 |
| Paraloid™ | 4 | 4 | 4 |
| R-960 TiO2 | 1 | 1 | 1 |
| Carbonate de calcium broyé avec 0,7 % de polymère selon l'art antérieur | 20 | 0 | 0 |
| Carbonate de calcium broyé avec 0,7 % de polymère selon l'art antérieur puis mélangé avec 0,75 % de polymère selon l'invention | 0 | 20 | 0 |
| Carbonate de calcium broyé avec 0,7 % de polymère selon l'art antérieur puis mélangé avec 0,85 % de polymère selon l'invention | 0 | 0 | 20 |
| Acide stéarique* | 1,25 | 0,45 | 0,45 |
| Impact (J) à 23°C | 12,6 | 15,0 | 14,7 |
| Impact (J) à 0°C | 8,6 | 10,6 | 11,2 |
| Impact (J) à -10°C | 7,6 | 8,2 | 8,7 |

| | | | |
|---|---|---|---|
| Les % de polymères s'entendent en poids sec de polymère par rapport au poids sec de carbonate de calcium * % en poids sec d'acide stéarique par rapport au poids sec de carbonate de calcium. | | | |

Ces résultats démontrent bien que l'utilisation des polymères selon l'invention conduit à des résistances à l'impact améliorées, par rapport à l'utilisation d'un polymère de l'art antérieur avec une quantité d'acide stéarique supérieure à celle mise en oeuvre dans le cas de l'invention et ce, à 3 températures différentes.

## Revendications

1. Utilisation, comme agent compatibilisant d'une charge minérale, dans un procédé de fabrication d'un matériau thermoplastique chloré contenant au moins une charge minérale, d'au moins un polymère **caractérisé en ce qu'**il est un polymère peigne contenant au moins une fonction oxyde de polyalkylène greffée sur au moins un monomère anionique à insaturation éthylénique.

2. Utilisation selon la revendication 1, **caractérisée en ce que** ledit polymère peigne est mis en oeuvre pendant le procédé de fabrication d'un matériau thermoplastique chloré selon le mode :
1. sous forme de poudre sèche, résultant des étapes de :
- broyage et / ou dispersion en milieu aqueux de la charge minérale en présence dudit polymère, et éventuellement en présence d'au moins un autre agent de broyage en voie humide et / ou d'au moins un autre agent dispersant,
- séchage de la dispersion et / ou de la suspension aqueuse de matière minérale obtenue, avec introduction éventuelle dudit polymère, éventuellement traitement puis classification de la poudre obtenue
2. et / ou sous forme de poudre sèche, résultant des étapes de :
- broyage à sec de la charge minérale en présence dudit polymère, et éventuellement en présence d'au moins un autre agent de broyage à sec,
- éventuellement traitement et classification de la poudre obtenue,
3. et / ou sous forme de poudre sèche, résultant des étapes de :
- introduction dudit polymère dans une dispersion et / ou dans une suspension aqueuse contenant la charge minérale,
- séchage de la dispersion et / ou de la suspension aqueuse de matière minérale obtenue, avec introduction éventuelle dudit polymère, éventuellement traitement puis classification de la poudre obtenue,
4. et / ou sous forme de poudre sèche, résultant des étapes de :
- séchage d'une dispersion et / ou d'une suspension aqueuse contenant la charge minérale en présence dudit polymère,
- éventuellement traitement et classification de la poudre obtenue,
5. et / ou sous forme de poudre sèche, résultant des étapes du séchage d'une solution et / ou d'une émulsion contenant ledit polymère et au moins un autre composé choisi parmi un stabilisant thermique et / ou un stabilisant UV et / ou un lubrifiant et / ou un modificateur de rhéologie et / ou un modificateur d'impact et / ou un agent de processabilité,
6. et / ou sous forme de poudre sèche mélangée avec une résine thermoplastique chlorée et une charge minérale,
et préférentiellement selon le mode 1, et / ou le mode 2, et / ou le mode 3, et / ou le mode 5.

3. Utilisation, selon l'une des revendications 1 ou 2, **caractérisée en ce que** la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

4. Utilisation, selon l'une des revendications 1 à 3, **caractérisée en ce que** ledit matériau thermoplastique chloré est destiné à la fabrication de tubes, tels que pour l'adduction d'eau, l'assainissement, l'irrigation, les gaines pour le passage des câbles, ou encore destiné à la fabrication de matériaux de construction extérieurs et / ou intérieurs, tels que des profilés de fenêtres, des volets, des portes, des bardages, des faux plafonds, ou encore destiné à la fabrication de pièces industrielles.

5. Utilisation, selon l'une des revendications 1 à 4, **caractérisée en ce que** la charge minérale est choisie parmi le carbonate de calcium naturel ou synthétique, les dolomies, le calcaire, le kaolin, le talc, le gypse, l'oxyde de titane, le blanc satin ou encore le trihydroxyde d'aluminium, le mica, le noir de carbone et les mélanges de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement **en ce qu'**elle est une charge minérale choisie parmi le carbonate de calcium naturel ou synthétique, le talc et les mélanges de ces charges, très préférentiellement **en ce qu'**elle est une charge minérale choisie parmi le carbonate de calcium naturel ou synthétique ou leurs mélanges, et de manière extrêmement préférentielle **en ce qu'**elle est un carbonate de calcium naturel choisi parmi le marbre, la calcite, la craie ou leurs mélanges.

6. Utilisation selon l'une des revendications 1 à 5, **caractérisée en ce que** ledit procédé met en oeuvre :
(a) de 0,1 à 99 % en poids sec d'au moins une résine thermoplastique chlorée, par rapport au poids total de la formulation thermoplastique chlorée,
(b) de 0,1 à 90 % en poids sec d'au moins une charge minérale, par rapport au poids total de la formulation thermoplastique chlorée,
(c) de 0,01 à 5 %, préférentiellement de 0,1 à 3 % en poids sec d'un polymère peigne constitué d'au moins un monomère anionique à insaturation éthylénique sur lequel est greffé au moins une fonction oxyde de polyalkylène, par rapport au poids sec de charge minérale,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, par rapport au poids total de la formulation thermoplastique chlorée,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit polymère peigne, cet agent de compatibilité étant préférentiellement constitué d'au moins un acide gras ayant de 8 à 20 atomes de carbone, cet agent de compatibilité étant très préférentiellement choisi parmi l'acide stéarique et ses sels ou leurs mélanges, le sel de l'acide stéarique étant préférentiellement un sel de calcium.

7. Utilisation selon l'une des revendications 1 à 6, **caractérisée en ce que** ledit polymère peigne est constitué, exprimé en poids :
a) de 2 % à 95 %, préférentiellement de 5 % à 50 %, très préférentiellement de 5 % à 25 % d'au moins un monomère anionique à insaturation éthylénique et à fonction monocarboxylique choisi préférentiellement parmi l'acide acrylique ou méthacrylique ou encore les hémiesters de diacides tels que les monoesters en C₁ à C₄ des acides maléique ou itaconique, ou choisi parmi les monomères à insaturation éthylénique et fonction dicarboxylique et préférentiellement parmi l'acide itaconique, maléique, ou encore parmi les anhydrides d'acides carboxyliques, tels que préférentiellement l'anhydride maléique ou choisi parmi les monomères à insaturation éthylénique et à fonction sulfonique tels que préférentiellement l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que préférentiellement l'acide vinyl phosphonique, ou les mélanges de ces monomères,
b) de 2 % à 95 %, préférentiellement de 50 % à 95 %, très préférentiellement de 70 % à 95 % d'au moins un monomère à insaturation éthylénique non ionique de formule (I) : 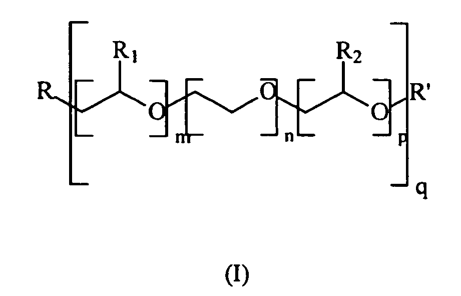 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α - α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'au moins un monomère organofluoré, ou encore d'au moins un monomère organosililé, ou de leurs mélanges,
d) de 0 % à 3 % d'au moins un monomère réticulant choisi préférentiellement dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou de leurs mélanges,
le total des proportions des constituants a), b), c), et d) étant égal à 100 %.

8. Utilisation selon l'une des revendications 1 à 7, **caractérisée en ce que** ledit polymère obtenu sous forme acide et éventuellement distillé, est partiellement ou totalement neutralisé par un ou plusieurs agents de neutralisation disposant d'une fonction neutralisante monovalente ou d'une fonction neutralisante polyvalente tels que par préférentiellement pour la fonction monovalente ceux choisis dans le groupe constitué par les cations alcalins, très préférentiellement le sodium, le potassium, le lithium, l'ammonium ou les amines primaires, secondaires ou tertiaires aliphatiques et/ou cycliques telles que préférentiellement la stéarylamine, les éthanolamines (mono, di-, triéthanolamine), la mono et diéthylamine, la cyclohexylamine, la méthylcyclohexylamine, l'amino méthyl propanol, la morpholine, ou bien pour la fonction polyvalente ceux choisis préférentiellement dans le groupe constitué par les cations divalents alcalino-terreux, très préférentiellement le magnésium et le calcium, ou encore le zinc, de même que par les cations trivalents, dont très préférentiellement l'aluminium, ou encore par des cations de valence plus élevée.

9. Matériau thermoplastique chloré contenant :
(a) au moins une résine thermoplastique chlorée,
(b) au moins une charge minérale,
(c) au moins un agent de compatibilité qui est constitué d'au moins un polymère peigne, contenant au moins une fonction oxyde de polyalkylène greffée sur au moins un monomère anionique à insaturation éthylénique,
(d) éventuellement au moins un autre composé choisi parmi un stabilisant thermique et / ou un stabilisant UV et / ou un lubrifiant et / ou un modificateur de rhéologie et / ou un modificateur d'impact et / ou un agent de processabilité,
(e) éventuellement au moins un autre agent de compatibilité que ledit polymère peigne, cet agent de compatibilité étant préférentiellement constitué d'au moins un acide gras ayant de 8 à 20 atomes de carbone, cet agent de compatibilité étant très préférentiellement choisi parmi l'acide stéarique et ses sels ou leurs mélanges, le sel de l'acide stéarique étant préférentiellement un sel de calcium.

10. Matériau thermoplastique chloré selon la revendication 9, **caractérisé en ce que** la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges

11. Matériau thermoplastique chloré selon l'une des revendications 9 ou 10, **caractérisé en ce qu'**il est destiné à la fabrication de tubes, tels que pour l'adduction d'eau, l'assainissement, l'irrigation, les gaines pour le passage des câbles, ou encore destiné à la fabrication de matériaux de construction extérieurs et / ou intérieurs, tels que des profilés de fenêtres, des volets, des portes, des bardages, des faux plafonds, ou encore destiné à la fabrication de pièces industrielles.

12. Matériau thermoplastique chloré selon l'une des revendications 9 à 11, **caractérisé en ce que** la charge minérale est choisie parmi le carbonate de calcium naturel ou synthétique, les dolomies, le calcaire, le kaolin, le talc, le gypse, l'oxyde de titane, le blanc satin ou encore le trihydroxyde d'aluminium, le mica, le noir de carbone et les mélanges de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, préférentiellement **en ce qu'**elle est une charge minérale choisie parmi le carbonate de calcium naturel ou synthétique, le talc et les mélanges de ces charges, très préférentiellement **en ce qu'**elle est une charge minérale choisie parmi le carbonate de calcium naturel ou synthétique ou leurs mélanges, et de manière extrêmement préférentielle **en ce qu'**elle est un carbonate de calcium naturel choisi parmi le marbre, la calcite, la craie ou leurs mélanges.

13. Matériau thermoplastique chloré selon l'une des revendications 9 à 12, **caractérisé en ce qu'**il contient :
(a) de 0,1 à 99 % en poids sec d'au moins une résine thermoplastique chlorée, par rapport au poids total de la formulation thermoplastique,
(b) de 0,1 à 90 % en poids sec d'au moins une charge minérale, par rapport au poids total de la formulation thermoplastique chlorée,
(c) de 0,01 à 5 %, préférentiellement 0,1 à 3 % en poids sec d'un polymère peigne constitué d'au moins un monomère à insaturation éthylénique sur lequel est greffé au moins une fonction oxyde de polyalkylène, par rapport au poids sec de charge minérale,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, par rapport au poids total de la formulation thermoplastique chlorée,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit polymère peigne, cet agent de compatibilité étant préférentiellement constitué d'au moins un acide gras ayant de 8 à 20 atomes de carbone, cet agent de compatibilité étant très préférentiellement choisi parmi l'acide stéarique et ses sels ou leurs mélanges, le sel de l'acide stéarique étant préférentiellement un sel de calcium.

14. Matériau thermoplastique chloré selon l'une des revendications 9 à 13, **caractérisé en ce que** le polymère peigne utilisé comme agent compatibilisant est constitué, exprimé en poids :
a) de 2 % à 95 %, préférentiellement de 5 % à 50 %, très préférentiellement de 5 % à 25 % d'au moins un monomère anionique à insaturation éthylénique et à fonction monocarboxylique choisi préférentiellement parmi l'acide acrylique ou méthacrylique ou encore les hémiesters de diacides tels que les monoesters en C₁ à C₄ des acides maléique ou itaconique, ou choisi parmi les monomères à insaturation éthylénique et fonction dicarboxylique et préférentiellement parmi l'acide itaconique, maléique, ou encore parmi les anhydrides d'acides carboxyliques, tels que préférentiellement l'anhydride maléique ou choisi parmi les monomères à insaturation éthylénique et à fonction sulfonique tels que préférentiellement l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que préférentiellement l'acide vinyl phosphonique, ou les mélanges de ces monomères,
b) de 2 % à 95, préférentiellement de 50 % à 95 %, très préférentiellement de 70 % à 95 % d'au moins un monomère à insaturation éthylénique non ionique de formule (I) : 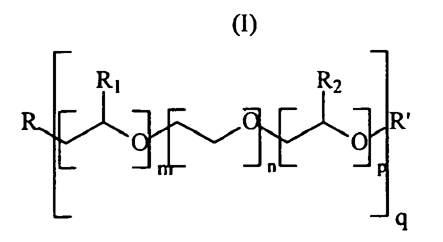 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, ou un groupement ionique ou ionisable tel qu'un phosphate, un phosphonate, un sulfate, un sulfonate, un carboxylique, ou encore une amine primaire, secondaire ou tertiaire, ou un ammonium quaternaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés, ou d'au moins un monomère cationique ou ammonium quaternaire tels que le chlorure ou le sulfate de [2-(méthacryloyloxy) éthyl] triméthyl ammonium, le chlorure ou le sulfate de [2-(acryloyloxy) éthyl] triméthyl ammonium, le chlorure de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium, ou encore d'un monomère organofluoré, ou encore d'un monomère organosililé ou de leurs mélanges,
d) de 0 % à 3 % d'au moins un monomère réticulant choisi préférentiellement dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou de leurs mélanges,
le total des proportions des constituants a), b), c), et d) étant égal à 100 %.

15. Matériau thermoplastique chloré selon l'une des revendications 9 à 14, **caractérisé en ce que** ledit polymère obtenu sous forme acide et éventuellement distillé, est partiellement ou totalement neutralisé par un ou plusieurs agents de neutralisation disposant d'une fonction neutralisante monovalente ou d'une fonction neutralisante polyvalente tels que par préférentiellement pour la fonction monovalente ceux choisis dans le groupe constitué par les cations alcalins, très préférentiellement le sodium, le potassium, le lithium, l'ammonium ou les amines primaires, secondaires ou tertiaires aliphatiques et/ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, ou bien pour la fonction polyvalente ceux choisis préférentiellement dans le groupe constitué par les cations divalents alcalino-terreux, très préférentiellement le magnésium et le calcium, ou encore le zinc, de même que par les cations trivalents, dont très préférentiellement l'aluminium, ou encore par des cations de valence plus élevée.

## Claims

1. Use as a compatibilising agent of a mineral filler, in a process of manufacture of a chlorinated thermoplastic material containing at least one mineral filler, of at least one polymer **characterised in that** it is a comb polymer containing at least one polyalkylene oxide group grafted on to at least one anionic monomer with ethylenic unsaturation.

2. Use according to claim 1, **characterised in that** the said comb polymer is used during the process of manufacture of a chlorinated thermoplastic material, depending on the method:
1. in the form of dry powder, resulting from the stages of:
- grinding and/or dispersion in an aqueous medium of the mineral filler in the presence of the said polymer, and possibly in the presence of at least one other grinding agent in an aqueous medium and/or at least one other dispersing agent,
- drying of the dispersion and/or of the aqueous suspension of mineral matter obtained, with possible introduction of the said polymer, and possible treatment followed by classification of the powder obtained,
2. and/or in the form of dry powder, resulting from the stages of:
- dry grinding of the mineral filler in the presence of the said polymer, and possibly in the presence of at least one other dry grinding agent,
- possible treatment and classification of the powder obtained,
3. and/or in the form of dry powder, resulting from the stages of:
- introduction of the said polymer into a dispersion and/or into an aqueous suspension containing the mineral filler,
- drying of the dispersion and/or of the aqueous suspension of mineral matter obtained, with possible introduction of the said polymer, and possible treatment followed by classification of the powder obtained,
4. and/or in the form of dry powder, resulting from the stages of:
- drying of a dispersion and/or into an aqueous suspension containing the mineral filler in the presence of the said polymer,
- possible treatment and classification of the powder obtained,
5. and/or in the form of a dry powder, resulting from the stages of drying of a solution and/or of an emulsion containing the said polymer and at least one other compound chosen from among a thermal stabiliser and/or a UV stabiliser and/or a lubricant and/or a rheology modifier and/or an impact modifier and/or a processability agent,
6. and/or in the form of dry powder mixed with a chlorinated thermoplastic resin and a mineral filler,
and preferentially according to method 1, and/or method 2, and/or method 3, and/or method 5.

3. Use according to one of the claims 1 or 2, **characterised in that** the chlorinated thermoplastic resin is chosen from among PVC, post-chlorinated polyvinyl chloride (PVCC), chlorinated polyethylene, the copolymers of the PVC-vinyl polyacetate type (PVC-PVAC), and their blends.

4. Use, according to one of the claims 1 to 3, **characterised in that** the said chlorinated thermoplastic material is intended for the manufacture of tubes, such as for the conveyance of water, drainage, irrigation, sheaths for the passage of cables, or again intended for the manufacture of external and/or internal construction materials, such as window profiles, shutters, doors, claddings, false ceilings, or again intended for the manufacture of industrial parts.

5. Use, according to one of the claims 1 to 4, **characterised in that** the mineral filler is chosen from among natural or synthetic calcium carbonate, the dolomites, limestone, kaolin, talc, gypsum, titanium dioxide, satin white or again aluminium trihydroxide, mica, carbon black and blends of more than one of these fillers together, such as talc-calcium carbonate, calcium carbonate-kaolin blends, or again blends of calcium carbonate with aluminium trihydroxide, or again blends with synthetic or natural fibres, or again mineral co-structures such as talc-calcium carbonate or talc-titanium dioxide co-structures, preferentially **in that** it is a mineral filler chosen from among natural or synthetic calcium carbonate, talc and blends of these fillers, very preferentially **in that** it is a mineral filler chosen from among natural or synthetic calcium carbonate or their blends, and extremely preferentially **in that** it is a natural calcium carbonate chosen from among marble, calcite, chalk or their blends.

6. Use according to one of the claims 1 to 5, **characterised in that** the said process uses:
(a) between 0.1 and 99% by dry weight of at least one chlorinated thermoplastic resin, compared to the total weight of the chlorinated thermoplastic formulation,
(b) between 0.1 and 90% by dry weight of at least one mineral filler, compared to the total weight of the chlorinated thermoplastic formulation,
(c) between 0.01 and 5%, and preferentially between 0.1 and 3%, by dry weight of a comb polymer consisting of at least one anionic monomer with ethylenic unsaturation on to which is grafted at least one polyalkylene oxide group, compared to the dry weight of mineral filler,
(d) between 0 and 20%, and preferentially between 5 and 20%, by dry weight of a thermal stabiliser and/or a UV stabiliser and/or a lubricant and/or a rheology modifier and/or an impact modifier and/or a processability agent, compared to the total weight of the chlorinated thermoplastic formulation,
(e) between 0 and 3%, and preferentially between 0 and 1%, and very preferentially between 0 and 0.5%, and extremely preferentially between 0 and 0.2%, by dry weight relative to the dry weight of mineral filler, of another compatibility agent than the said comb polymer, where this compatibility agent is preferentially constituted by at least one fatty acid having 8 to 20 carbon atoms, and where this compatibility agent is very preferentially chosen from among stearic acid or its salts, or their blends, and where the stearic acid salt is preferentially a calcium salt.

7. Use according to one of the claims 1 to 6, **characterised in that** the said comb polymer consists, expressed by weight:
a) between 2% and 95%, preferentially between 5% and 50%, very preferentially between 5% and 25% of at least one anionic monomer with ethylenic unsaturation and with a monocarboxylic function preferentially chosen from among acrylic or methacrylic acid, or again the diacid hemiesters such as the C₁ to C₄ monoesters of maleic or itaconic acids, or chosen from among the monomers with ethylenic unsaturation and with a dicarboxylic function and preferentially from among itaconic or maleic acid, or again from among the anhydrides of carboxylic acids, such as preferentially maleic anhydride, or chosen from among the monomers with ethylenic unsaturation and with a sulphonic function such as preferentially acrylamido-methyl-propane-sulphonic acid, sodium methallylsulphonate, vinyl sulphonic acid and styrene sulphonic acid, or again chosen from among the monomers with ethylenic unsaturation and with a phosphoric function such as preferentially vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or blends of these monomers,
b) between 2% and 95%, preferentially between 50% and 95%, and very preferentially between 70% and 95%, of at least one non-ionic monomer with ethylenic unsaturation, of formula (I): 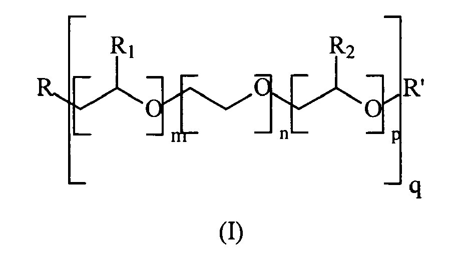 where:
- m and p represent a number of alkylene oxide units of less than or equal to 150,
- n represents a number of ethylene oxide units of less than or equal to 150,
- q represents a whole number at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable group, preferentially belonging to the group of vinylics, or to the group of acrylic, methacrylic, maleic esters, or to the group of unsaturated urethanes such as acrylurethane, methacrylurethane, α- α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their blends, and preferentially represents a hydrocarbonated radical having 1 to 12 carbon atoms, and very preferentially a hydrocarbonated radical having 1 to 4 carbon atoms.
or a blend of several monomers of formula (I),
c) between 0% and 50% of at least one monomer of the acrylamide or methacrylamide type, or their derivates such as N-[3-(dimethylamino) propyl] acrylamide or N-[3-(dimethylamino) propyl] methacrylamide, and their blends, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again at least one organofluorate monomer, or again at least one organosililate monomer, or their blends,
d) between 0% and 3% of at least one crosslinking monomer chosen preferentially from the group constituted by ethylene glycol dimethacrylate, trimethylolpropanetriacrylate, allyl acrylate, the allyl maleates, methylene-bis-acrylamide, methylene-bis-methacrylamide, tetrallyloxyethane, the triallylcyanurates, the allyl ethers obtained from polyols such as pentaerythritol, sorbitol, sucrose or their blends,
where the total proportions of the constituents a), b), c) and d) are equal to 100%.

8. Use according to one of the claims 1 to 7, **characterised in that** the said polymer obtained in the acid form, and possibly distilled, is partially or totally neutralised by one or more neutralisation agents having a monovalent neutralising function or a polyvalent neutralising function such as, preferentially, for the monovalent function of those chosen from the group constituted by the alkaline cations, very preferentially sodium, potassium, lithium, ammonium or the primary, secondary or tertiary aliphatic and/or cyclic amines, such as, preferentially, stearylamine, the ethanolamines (mono-, di-, triethanolamine), mono- and diethylamine, cyclohexylamine, methylcyclohexylamine, amino methyl propanol, morpholine, or again, for the polyvalent function, those chosen preferentially from the group constituted by the alkaline earth divalent cations, very preferentially magnesium and calcium, or again zinc, and also by the trivalent cations, of which very preferentially aluminium, or again by certain cations of higher valency.

9. Chlorinated thermoplastic material containing:
(a) at least one chlorinated thermoplastic resin,
(b) at least one mineral filler,
(c) at least one compatibility agent which consists of at least one comb polymer, containing at least one polyalkylene oxide group grafted on to at least one anionic monomer with ethylenic unsaturation,
(d) possibly at least one other compound chosen from among a thermal stabiliser and/or a UV stabiliser and/or a lubricant and/or a rheology modifier and/or an impact modifier and/or a processability agent,
(e) possibly at least one other compatibility agent other than the said comb polymer, this compatibility agent preferentially consisting of at least one fatty acid having 8 to 20 carbon atoms, this compatibility agent being very preferentially chosen from among stearic acid or its salts or their blends, and the salt of stearic acid preferentially being a calcium salt.

10. A chlorinated thermoplastic material according to claim 9, **characterised in that** the chlorinated thermoplastic resin is chosen from among PVC, post-chlorinated polyvinyl chloride (PVCC), chlorinated polyethylene, the copolymers of the PVC-vinyl polyacetate type (PVC-PVAC), and their blends

11. A chlorinated thermoplastic material according to one of the claims 9 or 10, **characterised in that** it is intended for the manufacture of tubes, such as for the conveyance of water, drainage, irrigation, sheaths for the passage of cables, or again intended for the manufacture of external and/or internal construction materials, such as window profiles, shutters, doors, claddings, false ceilings, or again intended for the manufacture of industrial parts.

12. A chlorinated thermoplastic material according to one of the claims 9 to 11, **characterised in that** the mineral filler is chosen from among natural or synthetic calcium carbonate, the dolomites, limestone, kaolin, talc, gypsum, titanium dioxide, satin white or again aluminium trihydroxide, mica, carbon black and blends of more than one of these fillers together, such as talc-calcium carbonate, calcium carbonate-kaolin blends, or again blends of calcium carbonate with aluminium trihydroxide, or again blends with synthetic or natural fibres, or again mineral co-structures such as talc-calcium carbonate or talc-titanium dioxide co-structures, preferentially **in that** it is a mineral filler chosen from among natural or synthetic calcium carbonate, talc and blends of these fillers, very preferentially **in that** it is a mineral filler chosen from among natural or synthetic calcium carbonate or their blends, and extremely preferentially **in that** it is a natural calcium carbonate chosen from among marble, calcite, chalk or their blends.

13. A chlorinated thermoplastic material according to one of the claims 9 to 12, **characterised in that** it contains:
(a) between 0.1 and 99% by dry weight of at least one chlorinated thermoplastic resin, compared to the total weight of the thermoplastic formulation,
(b) between 0.1 and 90% by dry weight of at least one mineral filler, compared to the total weight of the chlorinated thermoplastic formulation,
(c) between 0.01 and 5%, and preferentially between 0.1 and 3%, by dry weight of a comb polymer consisting of at least one monomer with ethylenic unsaturation on to which is grafted at least one polyalkylene oxide group, compared to the dry weight of mineral filler,
(d) between 0 and 20%, and preferentially between 5 and 20%, by dry weight of a thermal stabiliser and/or a UV stabiliser and/or a lubricant and/or a rheology modifier and/or an impact modifier and/or a processability agent, compared to the total weight of the chlorinated thermoplastic formulation,
(e) between 0 and 3%, and preferentially between 0 and 1%, and very preferentially between 0 and 0.5%, and extremely preferentially between 0 and 0.2%, by dry weight relative to the dry weight of mineral filler, of another compatibility agent than the said comb polymer, where this compatibility agent is preferentially constituted by at least one fatty acid having 8 to 20 carbon atoms, and where this compatibility agent is very preferentially chosen from among stearic acid or its salts, or their blends, and where the stearic acid salt is preferentially a calcium salt.

14. A chlorinated thermoplastic material according to one of the claims 9 to 13, **characterised in that** the comb polymer used as a compatibilising agent consists, expressed by weight:
a) between 2% and 95%, preferentially between 5% and 50%, very preferentially between 5% and 25% of at least one anionic monomer with ethylenic unsaturation and with a monocarboxylic function preferentially chosen from among acrylic or methacrylic acid, or again the diacid hemiesters such as the C₁ to C₄ monoesters of maleic or itaconic acids, or chosen from among the monomers with ethylenic unsaturation and with a dicarboxylic function and preferentially from among itaconic or maleic acid, or again from among the anhydrides of carboxylic acids, such as preferentially maleic anhydride, or chosen from among the monomers with ethylenic unsaturation and with a sulphonic function such as preferentially acrylamido-methyl-propane-sulphonic acid, sodium methallylsulphonate, vinyl sulphonic acid and styrene sulphonic acid, or again chosen from among the monomers with ethylenic unsaturation and with a phosphoric function such as preferentially vinyl phosphoric acid, ethylene glycol methacrylate phosphate, propylene glycol methacrylate phosphate, ethylene glycol acrylate phosphate, propylene glycol acrylate phosphate and their ethoxylates, or again chosen from among the monomers with ethylenic unsaturation and with a phosphonic function such as vinyl phosphonic acid, or blends of these monomers,
b) between 2% and 95%, preferentially between 50% and 95%, and very preferentially between 70% and 95%, of at least one non-ionic monomer with ethylenic unsaturation, of formula (I): 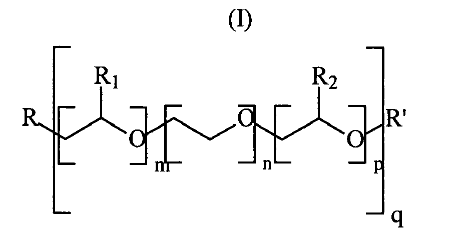 where:
- m and p represent a number of alkylene oxide units of less than or equal to 150,
- n represents a number of ethylene oxide units of less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable group, preferentially belonging to the group of vinylics, or to the group of acrylic, methacrylic, maleic esters, or to the group of unsaturated urethanes such as acrylurethane, methacrylurethane, α- α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 40 carbon atoms, or an ionic or ionisable grouping such as a phosphate, a phosphonate, a sulphate, a sulphonate, a carboxylic, or indeed a primary, secondary or tertiary amine, or a quaternary ammonium, or indeed their blends, and preferentially represents a hydrocarbonated radical having 1 to 12 carbon atoms, and very preferentially a hydrocarbonated radical having 1 to 4 carbon atoms.
or a blend of several monomers of formula (I),
c) between 0% and 50% of at least one monomer of the acrylamide or methacrylamide type, or their derivates such as N-[3-(dimethylamino) propyl] acrylamide or N-[3-(dimethylamino) propyl] methacrylamide, and their blends, or again of at least one non-water soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivates, or at least one cationic monomer or quaternary ammonium such as [2-(methacryloyloxy) ethyl] trimethyl ammonium chloride or sulphate, [2-(acryloyloxy) ethyl] trimethyl ammonium chloride or sulphate, [3-(acrylamido) propyl] trimethyl ammonium chloride or sulphate, dimethyl diallyl ammonium chloride or sulphate, [3-(methacrylamido) propyl] trimethyl ammonium chloride or sulphate, or again one organofluorate monomer, or again one organosililate monomer, or their blends,
d) between 0% and 3% of at least one crosslinking monomer chosen preferentially from the group constituted by ethylene glycol dimethacrylate, trimethylolpropanetriacrylate, allyl acrylate, the allyl maleates, methylene-bis-acrylamide, methylene-bis-methacrylamide, tetrallyloxyethane, the triallylcyanurates, the allyl ethers obtained from polyols such as pentaerythritol, sorbitol, sucrose or their blends,
where the total proportions of the constituents a), b), c) and d) are equal to 100%.

15. A chlorinated thermoplastic material according to one of the claims 9 to 14, **characterised in that** the said polymer obtained in the acid form, and possibly distilled, is partially or totally neutralised by one or more neutralisation agents having a monovalent neutralising function or a polyvalent neutralising function such as, preferentially, for the monovalent function of those chosen from the group constituted by the alkaline cations, very preferentially sodium, potassium, lithium, ammonium or the primary, secondary or tertiary aliphatic and/or cyclic amines, such as, preferentially, stearylamine, the ethanolamines (mono-, di-, triethanolamine), mono- and diethylamine, cyclohexylamine, methylcyclohexylamine, amino methyl propanol, morpholine, or again, for the polyvalent function, those chosen preferentially from the group constituted by the alkaline earth divalent cations, very preferentially magnesium and calcium, or again zinc, and also by the trivalent cations, of which very preferentially aluminium, or again by certain cations of higher valency.

## Patentansprüche

1. Anwendung, als Kompatibilisierungsmittel eines mineralischen Füllstoffs, in einem Verfahren zur Herstellung eines chlorierten thermoplastischen Werkstoffs, welcher mindestens einen mineralischen Füllstoff enthält, von mindestens einem Polymer, **dadurch gekennzeichnet, dass** es sich um ein Kammpolymer handelt, welches mindestens eine auf mindestens ein ethylenisch ungesättiges anionisches Monomer aufgepfropfte Polyalkylenoxidfunktion enthält.

2. Anwendung nach Anspruch 1, **dadurch gekennzeichnet, dass** das besagte Kammpolymer während des Verfahrens zur Herstellung eines chlorierten thermoplastischen Werkstoffs nach der folgenden Methode eingesetzt wird:
1. In der Form von Trockenpulver, welches durch die folgenden Schritte gewonnen wurde:
- Mahlen und / oder Dispersion in einem wässrigen Medium des mineralischen Füllstoffs bei Vorhandensein des besagten Polymers, und gegebenenfalls bei Vorhandensein mindestens eines anderen Mahlhilfsmittels im Nassverfahren und / oder mindestens eines anderen Dispergiermittels,
- Trocknen der Dispersion und / oder der gewonnenen wässrigen Mineralstoff-Suspension, gegebenenfalls mit Beimengen des besagten Polymers, gegebenenfalls Behandlung und anschließende Klassifizierung des gewonnenen Pulvers,
2. und / oder in der Form von Trockenpulver, welches durch die folgenden Schritte gewonnen wurde :
- Trockenmahlen des mineralischen Füllstoffs bei Vorhandensein des besagten Polymers, und gegebenenfalls bei Vorhandensein mindestens eines anderen Trockenmahlmittels,
- gegebenenfalls Behandlung und Klassifizierung des gewonnenen Pulvers,
3. und / oder in der Form von Trockenpulver, welches durch die folgenden Schritte gewonnen wurde:
- Beimengen des besagten Polymers in eine Dispersion und / oder in eine wässrige Suspension, welche den mineralischen Füllstoff enthält,
- Trocknen der Dispersion und / oder der gewonnenen wässrigen Mineralstoff-Suspension, gegebenenfalls mit Beimengen des besagten Polymers, gegebenenfalls Behandlung und anschließende Klassifizierung des gewonnenen Pulvers,
4. und / oder in der Form von Trockenpulver, welches durch die folgenden Schritte gewonnen wurde:
- Trocknen einer Dispersion und /oder einer wässrigen Suspension, welche den Füllstoff enthält, bei Vorhandensein des besagten Polymers,
- gegebenenfalls Behandlung und Klassifizierung des gewonnenen Pulvers,
5. und / oder in der Form von Trockenpulver, welches durch die Schritte des Trocknens einer Lösung und / oder einer Emulsion, welche das besagte Polymer sowie mindestens eine weitere Verbindung, gewählt unter einem Wärmestabilisator und / oder einem UV-Stabilisator und /oder einem Schmiermittel und / oder einem Rheologiemodifikationsmittel und / oder einem Schlagmodifikationsmittel und / oder einem Verarbeitungshilfsmittel, enthalten, gewonnen wurde,
6. und / oder in der Form von mit einem chlorierten themoplastischem Harz und einem Füllstoff vermischten Trockenpulver,
und vorzugsweise gemäß der Methode 1, und / oder der Methode 2, und / oder der Methode 3, und / oder der Methode 5.

3. Anwendung nach einem der Ansprüche 1 oder 2, **dadurch gekennzeichnet, dass** das chlorierte thermoplastische Harz unter PVC, überchloriertem Polyvinylchlorid (PVCC), chloriertem Polyethylen, Copolymeren vom Typ PVC-Polyvinylacetat (PVC-PVAC) und deren Gemischen gewählt wird.

4. Anwendung nach einem der Ansprüche 1 bis 3, **dadurch gekennzeichnet, dass** das besagte chlorierte thermoplastische Material für die Herstellung von Rohren, zum Beispiel für die Wasserversorgung, die Drainage, die Bewässerung, sowie von Kabeldurchlassrohren bestimmt ist, oder auch für die Herstellung von Baumaterialien für innen und/oder außen, wie beispielsweise Fensterprofile, Fensterläden, Verkleidungen oder Doppeldecken bestimmt ist, oder auch für die Herstellung von Industrieteilen bestimmt ist.

5. Anwendung nach einem der Ansprüche 1 bis 4, **dadurch gekennzeichnet, dass** der Füllstoff unter natürlichem oder synthetischem Calciumcarbonat, Dolomiten, Kalk, Kaolin, Talk, Gips, Titanoxid, weißglänzenden Lösungen oder auch Aluminiumoxidtrihydrat, Glimmer, Ruß und den Gemischen dieser Füllstoffe untereinander, wie die Gemische Talk-Calciumcarbonat, Calciumcarbonat-Kaolin, oder auch Gemische von Calciumcarbonat mit Aluminiumoxidtrihydrat, oder auch Gemische mit Kunst- oder Naturfasern oder auch Co-Strukturen von Mineralen wie die Co-Strukturen Talk-Calciumcarbonat oder Talk-Titandioxid gewählt wird, vorzugsweise **dadurch**, dass er ein unter natürlichem oder synthetischem Calciumcarbonat, Talk und den Gemischen dieser Füllstoffe gewählter Füllstoff ist, in sehr bevorzugter Weise **dadurch**, dass er ein unter natürlichem oder synthetischem Calciumcarbonat oder deren Gemischen gewählter Füllstoff ist, und äußerst vorzugsweise **dadurch**, dass er ein unter Marmor, Kalzit, Kreide oder deren Gemischen gewählter Füllstoff ist.

6. Anwendung gemäß einem der Ansprüche 1 bis 5, **dadurch gekennzeichnet, dass** das besagte Verfahren verwendet:
(a) von 0,1 bis 99 Trockengewichtsprozent mindestens eines chlorierten thermoplastischen Harzes im Verhältnis zum Gesamtgewicht der chlorierten thermoplastischen Formulierung,
(b) von 0,1 bis 90 Trockengewichtsprozent mindestens eines mineralen Füllstoffs im Verhältnis zum Gesamtgewicht der chlorierten thermoplastischen Formulierung,
(c) von 0,01 bis 5 %, vorzugsweise von 0,1 bis 3 Trockengewichtsprozent eines Kammpolymers, bestehend aus mindestens einem ethylenisch ungesättigten anionischen Monomer, auf welchem mindestens eine Polyalkylenoxid-Funktion aufgepfropft ist, im Verhältnis zum Gesamttrockengewicht des mineralischen Füllstoffs,
(d) von 0 bis 20 %, vorzugsweise von 5 bis 20 Trockengewichtsprozent eines Wärmestabilators und / oder eines UV-Stabilisators und / oder eines Schmiermittels und / oder eines Rheologiemodifikationsmittels und / oder eines Schlagmodifikationsmittels und / oder eines Verarbeitungshilfsmittels im Verhältnis zum Gesamtgewicht der chlorierten thermoplastischen Formulierung,
(e) von 0 bis 3 %, vorzugsweise von 0 bis 1 %, in sehr bevorzugter Weise von 0 bis 0,5 %, äußerst vorzugsweise von 0 bis 0,2 Trockengewichtsprozent, im Verhältnis zum Trockengewicht des mineralischen Füllstoffs, eines anderen Kompatibilisierungsmittels als das besagte Kammpolymer, wobei dieses Kompatibilisierungsmittel vorzugsweise aus mindestens einer Fettsäure mit 8 bis 20 Kohlenstoffatomen besteht, wobei dieses Kompatibilisierungsmittel in sehr bevorzugter Weise unter Stearinsäure und deren Salzen oder deren Gemische gewählt wird, wobei das Salz der Stearinsäure vorzugsweise ein Calciumsalz ist.

7. Anwendung gemäß nach einem der Ansprüche 1 bis 6, **dadurch gekennzeichnet, dass** sich der besagte Kammpolymer, ausgedrückt in Gewicht, wie folgt zusammensetzt:
a) von 2 % bis 95 %, vorzugsweise von 5 % bis 50 %, in sehr bevorzugter Weise von 5 % bis 25 % mindestens eines ethylenisch ungesättigten anionischen Monomers mit einbasischer Carbonfunktion, vorzugsweise gewählt unter Acryl- oder Methacrylsäure, oder auch den Disäure-Hemiestern wie die C₁ bis C₄-Monoestere der Malein- oder Itaconsäure, oder gewählt unter den ethylenisch ungesättigten Monomeren mit zweibasischer Carbonfunktion, und vorzugsweise unter Itacon- oder Maleinsäure, oder auch unter den Carbonsäureanhydriden, wie vorzugsweise Maleinanhydrid, oder gewählt unter den ethylenisch ungesättigten Monomeren mit Sulfonfunktion, wie vorzugsweise Acrylamidomethylpropansulfonsäure, Natriummethallylsulfonat, Vinylsulfonsäure und Styrolsulfonsäure, oder auch gewählt unter den ethylenisch ungesättigten Monomeren mit Phosphorfunktion wie vorzugsweise Vinylphosphorsäure, Ethylenglykol-Methacrylphosphat, Propylenglykol-Methacrylphosphat, Ethylenglykol-Acrylphosphat, Propylenglycol-Acrylphosphat und deren Ethoxylate oder auch gewählt unter den ethylenisch ungesättigten Monomeren mit Phosphonfunktion wie vorzugsweise Vinylphosphorsäure, oder den Gemischen dieser Monomere,
b) von 2 % bis 95 %, vorzugsweise von 50 % bis 95 %, in sehr bevorzugter Weise von 70 % bis 95 % mindestens eines ethylenisch ungesättigten nicht inoischen Monomers der Formel (I) : 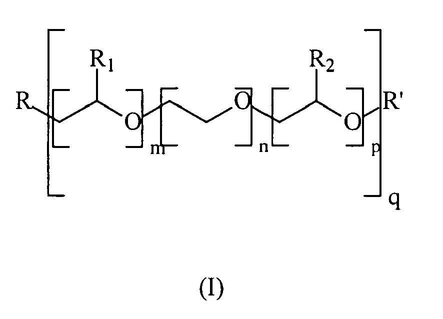 in welcher:
- m und p eine Anzahl von Alkylenoxid-Einheiten darstellt, welche niedriger als oder gleich 150 ist,
- n eine Anzahl von Ethylenoxid-Einheiten darstellt, welche niedriger als oder gleich 150 ist,
- q eine ganze Zahl darstellt, welche mindestens gleich 1 ist, wie 5 ≤ (m+n+p)q ≤ 150, und vorzugsweise wie 15 ≤ (m+n+p)q ≤ 120,
- R₁ den Wasserstoff oder das Methyl- oder Ethylradikal darstellt,
- R₂ den Wasserstoff oder das Methyl- oder Ethylradikal darstellt,
- R ein Radikal mit einer ungesättigten polymerisierbaren Funktion darstellt, welches vorzugsweise der Gryppe der Vinyle sowie der Gruppe der Acryl-, Methacryl- oder Maleinester, sowie der Gruppe der ungesättigten Urethanverbindungen wie Acryl-Urethan, Methacryl-Urethan, α-α '-Dimethylisopropenylbenzylurethan, Allylurethan, sowie der Gruppe der substituierten oder unsubstituierten Allyl- oder Vinylether, oder auch der Gruppe der ethylenisch ungesättigten Amide oder Imide angehört,
- R' den Wasserstoff oder ein Kohlenwasserstoffradikal mit 1 bis 40 Kohlenstoffatomen, oder eine ionische oder ionisierbare Gruppierung wie Phosphat, Phosphonat, Sulfat, Sulfonat, Carboxyl, oder auch Primär-, Sekundär- oder Tertiäramin, oder quaterniertes Ammonium, oder auch deren Gemische, darstellt, und vorzugsweise ein Kohlenwasserstoffradikal mit 1 bis 12 Kohlenstoffatomen, und in sehr bevorzugter Weise ein Kohlenwasserstoffradikal mit 1 bis 4 Kohlenstoffatomen darstellt,
oder ein Gemisch mehrerer Monomere der Formel (I),
c) von 0 % bis 50 % mindestens eines Monomers vom Typ Acrylamid oder Methacrylamid oder deren Derivate wie N-[3-(Dimethylamino) Propyl] Acrylamid oder N-[3-(Dimethylamino) Propyl] Methacrylamid und deren Gemische, oder auch mindestens eines nicht wasserlöslichen Monomers wie Alkylacrylate oder Alkylmethacrylate, ungesättigte Ester wie N-[2-(Dimethylamino) Ethyl]-Methacrylat oder N-[2-(Dimethylamino) Ethyl]-Acrylat, Vinyle wie Vinylazetat, Vinylpyrrolidon, Styrol, Alpha-Methylstyrol und deren Derivate, oder mindestens eines kationischen Monomers oder eines quaternierten Ammoniums wie [2-(Methacryloyloxy) Ethyl] Trimethylammoniumchlorid oder -sulfat, [2-(Acryloyloxy) Ethyl] Trimethylammoniumchlorid oder -sulfat, [3-(Acrylamido) Propyl] Trimethylammoniumchlorid, Dimethyldiallylammoniumchlorid oder -sulfat, le chlorure oder le sulfate de [3-(Methacrylamido) Propyl] Trimethylammoniumchlorid oder -sulfat, oder auch mindstens eines organofluorierten Monomers, oder auch mindestens eines organo-silierten Monomers oder deren Gemische,
d) von 0 % bis 3 % mindestens eines vernetzenden Monomers, vorzugsweise gewählt in der Gruppe bestehend aus Ethylenglykoldimethacrylat, Trimethylolpropantriacrylat, Allylacrylat, Allylmaleaten, Methylen-bis-Acrylamid, Methylen-bis-Methacrylamid, Tetrallyloxyethan, Triallylcyanurate, Allylether, welche aus Polyolen wie Pentaerythritol gewonnen werden, Sorbitol, Sucrose oder deren Gemische,
wobei die Summe der Anteile der Komponenten a), b), c), et d) gleich 100 % ist.

8. Anwendung nach einem der Ansprüche 1 bis 7, **dadurch gekennzeichnet, dass** das besagte in Säureform und gegebenenfalls destilliert gewonnene Polymer teilweise oder vollständig durch einen oder mehrere Neutralisationsmittel mit einer einwertigen Neutralisierungsfunktion oder einer mehrwertigen Neutralisierungsfunktion, wie vorzugsweise, für die einwertige Funktion, gewählt in der Gruppe bestehend aus Alkali-Kationen, in sehr bevorzugter Weise Natrium, Kalium, Lithium, Ammonium oder die aliphatischen und/oder zyklischen Primär-, Sekundär- oder Tertiäramine wie vorzugsweise Stearylamin, Äthanolamine (Mono-, Di-, Triäthanolamin), Mono- und Diethylamin, Cyclohexylamin, Methylcyclohexylamin, Aminomethylpropanol, Morpholin, oder, für die mehrwertige Funktion, vorzugsweise gewählt in der Gruppe bestehend aus zweiwertigen Erdalkalikationen, in sehr bevorzugter Weise Magnesium und Calcium, auch Zink, sowie durch die dreiwertigen Kationen, darunter in sehr bevorzugter Weise Aluminium, oder auch durch höherwertige Kationen neutralisiert wird..

9. Chloriertes thermoplastisches Material, enthaltend:
(a) Mindestens ein chloriertes thermoplastisches Harz,
(b) mindestens einen Füllstoff,
(c) mindestens ein Kompatibilisierungsmittel, welches aus mindestens einem Kammpolymer besteht und mindestens eine Polyalkylenoxidfunktion enthält, welche auf mindestens ein ethylenisch ungesättigtes anionisches Monomer aufgepfropft ist,
(d) gegebenenfalls mindestens eine andere Verbindung, gewählt unter einem Wärmestabilisator
und / oder einem UV-Stabilisator und / oder einem Schmiermittel und / oder einem Rheologiemodifikationsmittel
und / oder einem Schlagmodifikationsmittel und / oder einem Verarbeitungshilfsmittel,
(e) gegebenenfalls mindestens ein anderes Kompatibilisierungsmittel als das besagte Kammpolymer, wobei dieses Kompatibilisierungsmittel vorzugsweise aus mindestens einer Fettsäure mit 8 bis 20 Kohlenstoffatomen besteht, wobei dieses Kompatibilisierungsmittel in sehr bevorzugter Weise unter Stearinsäure und ihren Salzen oder deren Gemischen gewählt wird, wobei das Salz der Stearinsäure vorzugsweise ein Calciumsalz ist.

10. Chloriertes thermoplastisches Material nach Anspruch 9, **dadurch gekennzeichnet, dass** das chlorierte thermoplastische Harz unter dem PVC, überchloriertem Polyvinylchlorid (PVCC), chloriertem Polyethylen, Copolymeren vom Typ PVC-Polyvinylacetat (PVC-PVAC), und deren Gemischen gewählt wird.

11. Chloriertes thermoplastisches Material nach einem der Ansprüche 9 oder 10, **dadurch gekennzeichnet, dass** es für die Herstellung von Rohren, zum Beispiel für die Wasserversorgung, die Drainage, die Bewässerung, sowie von Kabeldurchlassrohren, oder auch für die Herstellung von Baumaterialien für innen und/oder außen, wie beispielsweise Fensterprofile, Fensterläden, Verkleidungen oder Doppeldecken, oder auch für die Herstellung von Industrieteilen bestimmt ist.

12. Chloriertes thermoplastisches Material nach einem der Ansprüche 9 bis 11, **dadurch gekennzeichnet, dass** der Füllstoff unter natürlichem oder synthetischem Kalziumcarbonat, Dolomiten, Kalk, Kaolin, Talk, Gips, Titanoxid, weissglänzenden Lösungen oder auch Aluminiumtrihydroxid, Glimmer, Ruß und den Gemischen dieser Füllstoffe untereinander, wie die Gemische Talk-Calciumcarbonat, Calciumcarbonat-Kaolin, oder Gemische von Calciumcarbonat mit Aluminiumoxidtrihydrat, oder auch Gemische mit Kunst- und Naturfasern, oder auch Co-Strukturen von Mineralen, wie die Co-Strukturen Talk-Kalziumcarbonat oder Talk-Titanoxid gewählt wird, vorzugsweise **dadurch**, dass er ein unter natürlichem oder synthetischem Calciumcarbonat, Talk oder Gemischen dieser Füllstoffe gewählter Füllstoff ist, in sehr bevorzugter Weise **dadurch**, dass er ein unter natürlichem oder synthetischem Calciumcarbonat oder deren Gemische gewählter Füllstoff ist, und äußerst vorzugsweise **dadurch**, dass er ein unter Marmor, Kalzit, Kreise oder deren Gemischen gewähltes natürliches Calciumcarbonat ist.

13. Chloriertes thermoplastisches Material nach einem der Ansprüche 9 bis 12, **dadurch gekennzeichnet, dass** es enthält :
(a) von 0,1 bis 99 Trockengewichtsprozent mindestens eines chlorierten thermoplastischen Harzes im Verhältnis zum Gesamtgewicht der thermoplastischen Formulierung,
(b) von 0,1 bis 90 Trockengewichtsprozent mindestens eines Füllstoffs im Verhältnis zum Gesamtgewicht der chlorierten thermoplastischen Formulierung,
(c) von 0,01 bis 5, vorzugsweise 0,1 bis 3 Trockengewichtsprozent eines Kammpolymers, bestehend aus mindestens einem ethylenisch ungesättigten Monomer, auf welchem mindestens eine Polyalkylenoxidfunktion aufgepropft ist, im Verhältnis zum Trockengewicht des Füllstoffs,
(d) von 0 bis 20, vorzugsweise von 5 à 20 Trockengewichtsprozent eines Wärmestabilisators und / oder eines UV-Stabilisators und / oder eines Schmiermittels und / oder eines Rheologiemodifikationsmittels und / oder eines Schlagmodifikationsmittels und / oder eines Verarbeitungshilfsmittels, im Verhältnis zum Gesamtgewicht der chlorierten thermoplastischen Fourmulierung,
(e) von 0 bis 3, vorzugsweise von 0 bis 1, in sehr bevorzugter Weise von 0 bis 0,5, äußerst vorzugsweise von 0 bis 0,2 Trockengewichtsprozent, im Verhältnis zum Trockengewicht des Füllstoffs, eines anderen Kompatibilisierungsmittels als das besagte Kammpolymer, wobei dieses Kompatibilisierungsmittel vorzugsweise aus mindestens einer Fettsäure mit 8 bis 20 Kohlenstoffatomen besteht, wobei dieses Kompatibilisierungsmittel in sehr bevorzugter Weise unter Stearinsäure und deren Salzen oder deren Gemische gewählt wird, wobei das Salz der Stearinsäure vorzugsweise ein Calciumsalz ist.

14. Chloriertes thermoplastisches Material nach einem der Ansprüche 9 bis 13, **dadurch gekennzeichnet, dass** sich das als Kompatibilisierungsmittel verwendete Kammpolymer, in Gewicht ausgedrückt, wie folgt zusammensetzt:
a) von 2 % bis 95 %, vorzugsweise von 5 % bis 50 %, in sehr bevorzugter Weise von 5 % bis 25 % mindestens eines ethylenisch ungesättigten anionischen Monomers mit einer einbasischen Carbonfunktion, vorzugsweise gewählt unter Acryl- oder Methacrylsäure oder auch den Disäure-Hemiestern wie die C₁ bis C₄-Monoestere der Malein- oder Itaconsäure, oder gewählt unter den ethylenisch ungesättigten Monomeren mit zweibasischer Carbonfunktion, und vorzugsweise unter Itacon- oder Maleinsäure, oder auch unter den Carbonsäureanhydriden, wie vorzugsweise Maleinanhydrid, oder gewählt unter den ethylenisch ungesättigten Monomeren mit Sulfonfunktion, wie vorzugsweise Acrylamidomethylpropansulfonsäure, Natriummethallylsulfonat, Vinylsulfonsäure und Styrolsulfonsäure, oder auch gewählt unter den ethylenisch ungesättigten Monomeren mit Phosphorfunktion wie vorzugsweise Vinylphosphorsäure, Ethylenglykol-Methacrylphosphat, Propylenglykol- Methacrylphosphat, Ethylenglykol-Acrylphosphat, Propylenglycol-Acrylphosphat und deren Ethoxylate oder auch gewählt unter den ethylenisch ungesättigten Monomeren mit Phosphonfunktion wie vorzugsweise Vinylphosphorsäure, oder den Gemischen dieser Monomere,
b) von 2 % bis 95 %, vorzugsweise von 50 % bis 95 %, in sehr bevorzugter Weise von 70 % bis 95 % mindestens eines ethylenisch ungesättigten nicht ionischen Monomers der Formel (I): 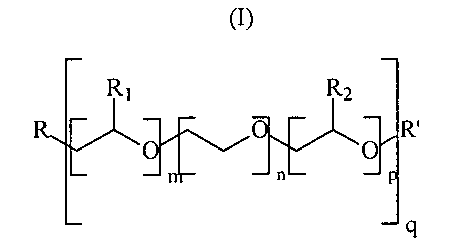 in welcher:
- m und p eine Anzahl von Alkylenoxid-Einheiten darstellt, welche niedriger als oder gleich 150 ist,
- n eine Anzahl von Ethylenoxid-Einheiten darstellt, welche niedriger als oder gleich 150 ist,
- q eine ganze Zahl darstellt, welche mindestens gleich 1 ist, wie 5 ≤ (m+n+p)q ≤ 150, und vorzugsweise wie 15 ≤ (m+n+p)q ≤ 120,
- R₁ den Wasserstoff oder das Methyl- oder Ethylradikal darstellt,
- R₂ den Wasserstoff oder das Methyl- oder Ethylradikal darstellt,
- R ein Radikal mit einer ungesättigten polymerisierbaren Funktion darstellt, welches vorzugsweise der Gruppe der Vinyle sowie der Gruppe der Acryl-, Methacryl- oder Maleinester, sowie der Gruppe der ungesättigten Urethanverbindungen wie Acryl-Urethan, Methacryl-Urethan, α-α'-Dimethylisopropenylbenzylurethan, Allylurethan, sowie der Gruppe der substituierten oder unsubstituierten Allyl- oder Vinylether, oder auch der Gruppe der ethylenisch ungesättigten Amide oder Imide angehört,
- R' den Wasserstoff oder ein Kohlenwasserstoffradikal mit 1 bis 40 Kohlenstoffatomen, oder eine ionische oder ionisierbare Gruppierung wie Phosphat, Phosphonat, Sulfat, Sulfonat, Carboxyl, oder auch Primär-, Sekundär- oder Tertiäramin, oder quaterniertes Ammonium, oder auch deren Gemische, darstellt, und vorzugsweise ein Kohlenwasserstoffradikal mit 1 bis 12 Kohlenstoffatomen, und in sehr bevorzugter Weise ein Kohlenwasserstoffradikal mit 1 bis 4 Kohlenstoffatomen darstellt,
oder ein Gemisch mehrerer Monomere der Formel (I),
c) von 0 % bis 50 % mindestens eines Monomers vom Typ Acrylamid oder Methacrylamid oder deren Derivate wie N-[3-(Dimethylamino) Propyl] Acrylamid oder N-[3-(Dimethylamino) Propyl] Methacrylamid und deren Gemische, oder auch mindestens eines nicht wasserlöslichen Monomers wie Alkylacrylate oder Alkylmethacrylate, ungesättigte Ester wie N-[2-(Dimethylamino) Ethyl]-Methacrylat oder N-[2-(Dimethylamino) Ethyl]-Acrylat, Vinyle wie Vinylazetat, Vinylpyrrolidon, Styrol, Alpha-Methylstyrol und deren Derivate, oder mindestens eines kationischen Monomers oder eines quaternierten Ammoniums wie [2-(Methacryloyloxy) Ethyl] Trimethylammoniumchlorid oder -sulfat, [2-(Acryloyloxy) Ethyl] Trimethylammoniumchlorid oder -sulfat, [3-(Acrylamido) Propyl] Trimethylammoniumchlorid, Dimethyldiallylammoniumchlorid oder -sulfat, le chlorure oder le sulfate de [3-(Methacrylamido) Propyl] Trimethylammoniumchlorid oder -sulfat, oder auch mindstens eines organofluorierten Monomers, oder auch mindestens eines organo-silierten Monomers oder deren Gemische,
d) von 0 % bis 3 % mindestens eines vernetzenden Monomers, vorzugsweise gewählt in der Gruppe bestehend aus Ethylenglykoldimethacrylat, Trimethylolpropantriacrylat, Allylacrylat, Allylmaleaten, Methylen-bis-Acrylamid, Methylen-bis-Methacrylamid, Tetrallyloxyethan, Triallylcyanurate, Allylether, welche aus Polyolen wie Pentaerythritol gewonnen werden, Sorbitol, Sucrose oder deren Gemische,
wobei die Summe der Anteile der Komponenten a), b), c), et d) gleich 100 % ist.

15. Chloriertes thermoplastisches Material nach einem der Ansprüche 9 bis 14, **dadurch gekennzeichnet, dass** das besagte in Säureform und gegebenenfalls destilliert gewonnene Polymer teilweise oder vollständig durch einen oder mehrere Neutralisationsmittel mit einer einwertigen Neutralisierungsfunktion oder einer mehrwertigen Neutralisierungsfunktion, wie vorzugsweise, für die einwertige Funktion, gewählt in der Gruppe bestehend aus Alkali-Kationen, in sehr bevorzugter Weise Natrium, Kalium, Lithium, Ammonium oder die aliphatischen und/oder zyklischen Primär-, Sekundär- oder Tertiäramine wie vorzugsweise Stearylamin, Äthanolamine (Mono-, Di-, Triäthanolamin), Mono- und Diethylamin, Cyclohexylamin, Methylcyclohexylamin, Aminomethylpropanol, Morpholin, oder, für die mehrwertige Funktion, vorzugsweise gewählt in der Gruppe bestehend aus zweiwertigen Erdalkalikationen, in sehr bevorzugter Weise Magnesium und Calcium, auch Zink, sowie durch die dreiwertigen Kationen, darunter in sehr bevorzugter Weise Aluminium, oder auch durch höherwertige Kationen neutralisiert wird..
